# EUROPÄISCHE PATENTSCHRIFT

(11) **EP 3 112 419 B1**
(45) Veröffentlichungstag und Bekanntmachung des Hinweises auf die Patenterteilung: **18.11.2020**
(21) Anmeldenummer: 15001936.2
(22) Anmeldetag: 30.06.2015
(51) Int. Cl.: C08L 61/14, C08L 63/00, C08G 59/40, C08J 5/04

(54) **FLAMMEFESTE UND HOCHTEMPERATURBESTÄNDIGE DUROMERE AUF DER GRUNDLAGE VON NAPHTHALIN-BASIERTEN EPOXIDHARZEN UND CYANATESTERN**
FLAME-RESISTANT AND HIGH TEMPERATURE RESISTANT DUROMERS ON THE BASIS OF NAPHTHALENE-BASED EPOXY RESINS AND CYANATE ESTERS
DUROMERES IGNIFUGES ET RESISTANTS AUX TEMPERATURES ELEVEES A BASE DE RESINES EPOXY DERIVEES DU NAPHTHALENE ET D'ESTERS DE CYANATE

(43) Veröffentlichungstag der Anmeldung: 04.01.2017
(73) Patentinhaber: Airbus Defence and Space GmbH, 82024 Taufkirchen (DE)
(72) Erfinder: Meier, Christoph, 82663 München (DE); Parlevliet, Patricia, 81539 München (DE); Döring, Manfred, 76744 Wörth am Rhein (DE)

(56) Entgegenhaltungen:
- CN-A- 102 174 242
- CN-A- 103 265 810
- US-A1- 2011 049 426
- US-A1- 2011 139 496

## Beschreibung

Die vorliegende Erfindung betrifft eine polymerisierbare Duromer-Zusammensetzung mit verbesserten Flammschutzeigenschaften, ein polymerisiertes Duromer mit verbesserten Flammschutzeigenschaften, ein Verfahren zur Herstellung des polymerisierten Duromers sowie die Verwendung der polymerisierbaren Duromer-Zusammensetzung zur Herstellung von konstruktiven Leichtbauteilen, vorzugsweise Kohlefaser-Verbundwerkstoffe (CFK) und ein konstruktives Leichtbauteil, vorzugsweise Kohlefaser-Verbundwerkstoff (CFK), enthaltend das polymerisierte Duromer.

### Hintergrund der Erfindung

Heutige kommerziell eingesetzte duromere Materialsysteme sind in ihrer thermischen Beständigkeit stark eingeschränkt und werden auf der Basis von Epoxidharzen dargestellt. Diese beschränkte Temperaturstabilität ist jedoch für viele Anwendungen, vor allem unter erhöhten thermischen und mechanischen Belastungen zu gering. Andere kommerziell erhältliche Materialien für Anwendungen unter erhöhten Temperaturen wie beispielsweise BMI oder Polyimid-Harze sind dagegen entweder toxisch oder sehr teuer und daher für eine kommerzielle Anwendung nicht geeignet. Cyanatester besitzen wiederum eine enorm hohe Glasübergangstemperatur von bis zu 400°C. Dies ist auf die hohe Vernetzungsdichte des Duromernetzwerks zurückzuführen, woraus jedoch auch eine sehr hohe Sprödigkeit des Materials resultiert. Aufgrund dieser Sprödigkeit findet diese Art von Duromersystem bisher in der Luftfahrt keinen kommerziellen Einsatz. Zusätzlich erfordern Cyanatestersysteme meist eine Aushärtungstemperatur von mehr als 200°C, was die Wirtschaftlichkeit dieser Systeme weiterhin einschränkt. Zudem sind die meist verwendeten Härter gesundheitlich bedenklich.

Die Materialien sollten darüber hinaus eine gute Flammfestigkeit aufweisen. Die verwendeten Flammschutzmittel sollten toxisch unbedenklich sein und die Eigenschaften der Materialien wie beispielsweise Glasübergangstemperatur und mechanische Eigenschaften nicht negativ beeinflussen. Zudem sollten die Flammschutzmittel eine möglichst niedrige Migrationstendenz aufweisen und geringe Mengen des Flammschutzmittels erforderlich sein um die gewünschte Flammfestigkeit zu erreichen.

Eine Vielzahl von Cyanatester (CE)/Epoxid-Kombinationen sind bisher bekannt. Beispielsweise beschreiben US Patent 5,494,981; US 2012/0309923; JP2009013205 (A); und C.-S. Wang, M.C. Lee: Synthesis, characterisation and properties of multifunctional naphthalenecontaining epoxy resins cured with cyanate ester, Journal of applied polymer science 73 (1999) 1611-1622, CE/Epoxid-Mischungen, die mit Hilfe von verschiedenen Härtern, beziehungsweise Katalysatoren dargestellt werden. Dabei kommen vor allem Nonylphenol/Übergangsmetallkatalystoren sowie Branstedt-Säuren und Amine zum Einsatz. Übergangsmetallkatalysatoren sind meist nicht in der Harzmatrix löslich, daher werden Phenole, wie beispielsweise Nonylphenol als Co-Katalysator eingesetzt. Nicht nur, dass die gesundheitstechnischen Aspekte der eingesetzten Übergangsmetallkatalysatoren bedenklich sind, ist Nonylphenol als "substance of very high concern" (SVHC) seit Dezember 2012 bei REACH gelistet [European Chemical Agency, Support document for identification of 4-Nonylphenol branched and linear, 13th December 2012]. Weiter besteht ein großer Nachteil von Brønstedt-Säuren darin, dass sie meist auf der Basis von Wasser vorliegen. Da Cyanatester in Kombination mit Wasser zur Bildung von Carbamaten neigen, welche bei erhöhten Temperaturen zu CO₂ und Aminen degradieren und auf diesem Weg die Leistungsfähigkeit des Materials einschränken, ist von dem Einsatz dieser Katalysatoren abzusehen.
Weiterhin beschreiben beispielsweise JP 08-176274 (A); JP 2010-059363; C.-S. Wang, M.C. Lee: Synthesis, characterisation and properties of multifunctional naphthalene-containing epoxy resins cured with cyanate ester, Journal of applied polymer science 73 (1999) 1611-1622, Materialien aus Cyanatestern und Naphthalin-basierten Epoxiden. Die in JP 08-176274 (A) eingesetzten Naphthalin-basierten Epoxide sind niedermolekular und difunktionell, was bedeutet, dass ein Naphthalinmolekül maximal zwei Glycidylether-Funktionalitäten besitzt. Durch diese niedrige Funktionalisierung des Naphthalin-Gerüsts ergibt sich nur eine, im Vergleich zu höher funktionalisierten Epoxiden geringe Vernetzungsdichte. Eine niedrige Vernetzungsdichte bedeutet wiederum eine geringere Temperaturstabilität (Tg) und höhere Wasseraufnahme, jedoch auch eine geringere Sprödigkeit. Die in JP 2010-059363 verwendeten Epoxide zur Darstellung von CE/Epoxid-Materialien sind Präpolymere auf der Basis von Polyphenylenether mit einer Naphthalin-Funktionalität im Polymerrückgrat. Diese Präpolymere besitzen nur eine Glycidylether-Funktionalität pro Wiederholungseinheit, was wiederum zu einer niedrigen Vernetzungsdichte führt. Zudem wird durch die eingeführte Polyphenylenether-Gruppe die molekulare Beweglichkeit des Polymerrückgrats im Gegensatz zu einem reinen Naphthalin-Rückgrat erhöht. Dies könnte zwar die mechanischen Eigenschaften des Materials verbessern, würde allerdings zu einem Abfall der thermischen Eigenschaften (Tg) führen. Bei Wang et. al. werden niedermolekulare tetrafunktionale naphthalin-basierte Epoxide in CE/Epoxid-Mischungen eingesetzt. Der Vorteil dieser tetraglycidylether-Naphthaline liegt in der enorm hohen Vernetzungsdichte des resultierenden Duromernetzwerks und den daraus resultierenden guten thermischen sowie hygrothermalen Eigenschaften des Materials. Ein zu großer Abfall des Tg durch das Hinzumischen des Epoxids zu dem Cyanateser kann auf diese Weise vermieden werden. Der Härteprozess in dieser Veröffentlichung wurde mit Hilfe von Nonylphenol/Kupfer(II)acetylacetonat durchgeführt, die bereits oben erläutert absolut vermieden werden sollten.
Zudem kann die Flammfestigkeit dieser Systeme weiter verbessert werden. Flammschutzmittel können zu Polmyeren im allgemeinen als simple Additive zugegeben werden (additiver Flammschutz) oder mittels speziell funktionalisierter Monomere in die Polymermatrix einpolymerisert werden. Bei speziell funktionalisierten Monomeren können jedoch andere Eigenschaften der Harzmatrix negativ beeinflusst werden. Beim additiven Flammschutz kann es zu erhöhter Migration der verwendeten Flammschutzmittel kommen, da die Flammschutzmittel nicht an die Polymermatrix gebunden sind.
Da Cyanatester aufgrund ihres hohen aromatischen Anteils bereits eine hohe Flammbeständigkeit aufweisen sind in der Literatur nur wenig Beispiele bekannt in denen Cyanatester mit Flammschutzmittel chemisch modifiziert wurden.
Jedoch wurden hierfür die Harzmatrix vor dem Aushärtevorgang mit den Flammschutzmitteln chemisch modifiziert. Derartige Konzepte sind beispielsweise in C. H. Lin, Polymer 2004, 45, 7911-7926; T.-H. Ho, H.-J. Hwang, J.-Y. Shieh, M.-C. Chung, Reactive and Functional Polymers 2009, 69, 176-182 und C. H. Lin, K. Z. Yang, T. S. Leu, C. H. Lin, J. W. Sie, Journal of Polymer Science Part A: Polymer Chemistry 2006, 44, 3487-3502 beschrieben.
Selbst wenn es hierbei nicht zu einer Verschlechterung der physikalischen und thermischen Eigenschaften der Polymersysteme kommt, so sind weitere Verfahrensschritte zur Modifikation der jeweiligen Komponenten notwendig. Zudem sind je nach Anforderungsprofil an das Polymer unter Umständen unterschiedlich modifizierte Ausgangsstoffe erforderlich was die Herstellung weiter verkompliziert und somit verteuert.
Die US 2011/0139496 A1 beschreibt Harzzusammensetzungen für Isolierschichtoberflächen, die eine geringe Rauheit aufweisen und die geeignet sind, darauf eine Leiterschicht zu bilden. Die Harzzusammensetzung enthält ein Cyanatesterharz und ein spezifisches Epoxidharz.
Die CN 103 265 810 A richtet sich auf Harzzusammensetzungen für ein Hochfrequenz-Hochgeschwindigkeitssubstrat, umfassend 10-50 Teile eines Cyanatesterharzes, 10-40 Teile Anhydrid-Verbindungen, 5-50 Teile Benzooxazinharz, 5-50 Teile Epoxidharz, 5-50 Teile eines Flammschutzmittels, 0-5 Teile Vernetzungsbeschleuniger und 0-80 Teile anorganischen Füllstoff.
Es wäre somit wünschenswert eine polymerisierbare Duromer-Zusammensetzung bereitzustellen, die hochtemperaturbeständig ist und gute Flammschutzeigenschaften aufweist. Zudem sollte sie bei moderaten Temperaturen ausgehärtet werden können und keine wasserbasierten Verbindungen wie beispielsweise Brønstedt-Säuren oder gesundheitlich bedenkliche Härter oder Katalysatoren wie beispielsweise Übergangsmetallkatalysatoren enthalten und bezüglich der Schlagfestigkeit modifizierbar sein. Des Weiteren ist es wünschenswert eine polymerisierbare Duromer-Zusammensetzung bereitzustellen, die zur Herstellung von konstruktiven Leichtbauteilen wie beispielsweise Kohlefaser-Verbundwerkstoffe (CFK) geeignet ist.

Aufgabe der vorliegenden Erfindung ist es daher, eine hoch flammgeschützte polymerisierbare Duromer-Zusammensetzung zur Verfügung zu stellen, die außerdem im ausgehärteten Zustand hochtemperaturbeständig ist und insbesondere, im Vergleich zu reinen Epoxidharzen eine erhöhte Temperaturbeständigkeit aufweist. Ferner ist eine Aufgabe der vorliegenden Erfindung, dass die polymerisierbare Duromer-Zusammensetzung im ausgehärteten Zustand eine geringe Migrationstendenz des Flammschutzmittels aufweist.
Ferner ist eine Aufgabe der vorliegenden Erfindung, dass die polymerisierbare Duromer-Zusammensetzung keine mit Flammschutzmitteln modifizierte Harzmatrix vor dem Aushärtevorgang erfordert.
Ferner ist eine Aufgabe der vorliegenden Erfindung, dass die polymerisierbare Duromer-Zusammensetzung im ausgehärteten Zustand eine hohe Glasübergangstemperatur aufweist, insbesondere eine Glasübergangstemperatur, die im Vergleich zu bisher bekannten CE/Epoxid-Kombinationen erhöht ist. Des Weiteren ist eine Aufgabe der vorliegenden Erfindung, dass die polymerisierbare Duromer-Zusammensetzung im ausgehärteten Zustand eine hohe Schlagfestigkeit aufweist, insbesondere eine Schlagfestigkeit, die im Vergleich zu reinen CE/Epoxid-Kombinationen verbessert ist. Ferner ist eine Aufgabe der vorliegenden Erfindung, dass die polymerisierbare Duromer-Zusammensetzung bei moderaten Temperaturen ausgehärtet werden kann und insbesondere, im Vergleich zu reinen Cyanatestern, eine geringere Aushärtetemperatur aufweist. Des Weiteren ist eine Aufgabe der vorliegenden Erfindung, dass die polymerisierbare Duromer-Zusammensetzung eine, im Vergleich zu reinen Cyanatestern, verbesserte Hydrolysebeständigkeit aufweist. Ferner ist eine Aufgabe der vorliegenden Erfindung, dass die polymerisierbare Duromer-Zusammensetzung keine gesundheitlich bedenklichen Härter und/oder Katalysatoren beinhaltet.

Diese Aufgaben werden durch die in den Ansprüchen definierten Gegenstände gelöst. Vorteilhafte Ausführungsformen sind Gegenstand von Unteransprüchen.

### Zusammenfassung der Erfindung

Ein erster Gegenstand der vorliegenden Erfindung ist dementsprechend eine polymerisierbare Duromer-Zusammensetzung, umfassend
a) ein di- oder polyfunktionelles organisches Cyanatesterharz,
b) ein naphthalin-basiertes Epoxidharz, und
c1) mindestens ein phosphorhaltiges Phenol wie in Anspruch 1 definiert.

Die polymerisierbare Duromer-Zusammensetzung kann weiterhin c2) mindestens ein phosphorhaltiges Epoxid und mindestens ein Diamin umfassen.
Die erfindungsgemäße polymerisierbare Duromer-Zusammensetzung ist im ausgehärteten Zustand hochtemperaturbeständig und weist insbesondere, im Vergleich zu reinen Epoxidharzen, eine erhöhte Temperaturbeständigkeit und Flammresistenz auf. Ein weiterer Vorteil ist, dass die erfindungsgemäße polymerisierbare Duromer-Zusammensetzung keine flammschutzmodifizierten Komponenten a) und b) erforderlich macht sondern das Flammschutzmittel in der Härterkomponente enthalten ist. Ein weiterer Vorteil ist, dass die Flammschutzmittel in der erfindungsgemäßen polymerisierbaren Duromer-Zusammensetzung im ausgehärteten Zustand keine Migrationstendenz aufweisen und im Gegensatz zu halogenhaltigen Flammschutzmitteln giftige und gesundheitsschädliche Degradationsprodukte vermieden werden.
Ein weiterer Vorteil ist, dass die erfindungsgemäße polymerisierbare Duromer-Zusammensetzung im ausgehärteten Zustand eine hohe Glasübergangstemperatur aufweist, die insbesondere im Vergleich zu bisher bekannten CE/Epoxid-Kombinationen erhöht ist. Ein weiterer Vorteil ist, dass die erfindungsgemäße polymerisierbare Duromer-Zusammensetzung im ausgehärteten Zustand eine hohe Schlagfestigkeit aufweist, insbesondere eine Schlagfestigkeit, die im Vergleich zu reinen CE/Epoxid-Kombinationen verbessert ist. Ein weiterer Vorteil ist, dass die erfindungsgemäße polymerisierbare Duromer-Zusammensetzung bei moderaten Temperaturen ausgehärtet werden kann, die insbesondere, im Vergleich zu reinen Cyanatestern, geringer ist. Ein weiterer Vorteil ist, dass die erfindungsgemäße polymerisierbare Duromer-Zusammensetzung eine, im Vergleich zu reinen Cyanatestern, verbesserte Hydrolysebeständigkeit aufweist. Ein weiterer Vorteil ist, dass die erfindungsgemäße polymerisierbare Duromer-Zusammensetzung keine gesundheitlich bedenklichen Härter und/oder Katalysatoren enthält.

Das di- oder polyfunktionelles organisches Cyanatesterharz und das naphthalin-basiertes Epoxidharz sind üblicherweise phosphorfrei.
Das phosphorhaltige Phenol enthält eine der folgenden Struktureinheiten (I) oder (II) 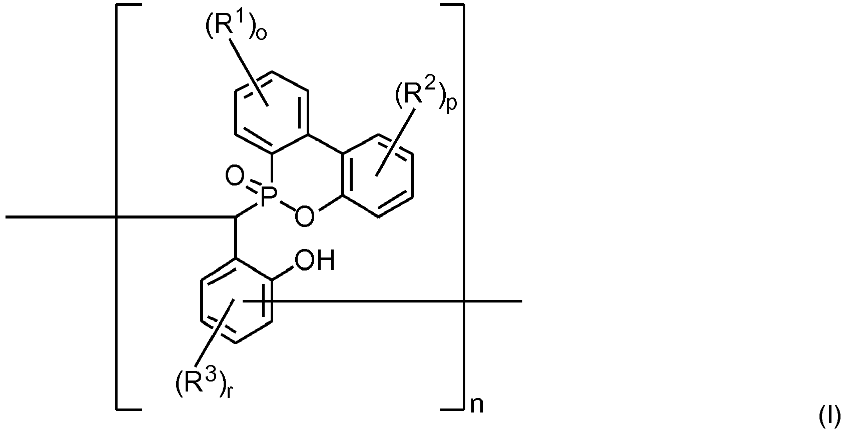 wobei
- n: eine Zahl zwischen 1 und 1000, vorzugsweise zwischen 200 und 500 ist,
- o: eine Zahl zwischen 0 und 4 ist vorzugsweise zwischen 0 und 2, stärker bevorzugt 0 oder 1 und am stärksten bevorzugt 0 ist,
- p: eine Zahl zwischen 0 und 4 ist vorzugsweise zwischen 0 und 2, stärker bevorzugt 0 oder 1 und am stärksten bevorzugt 0 ist,
- r: eine Zahl zwischen 0 und 3 ist vorzugsweise zwischen 0 und 2, stärker bevorzugt 0 oder 1 und am stärksten bevorzugt 0 ist,
- R¹: ein C₁-C₁₀-Alkyl ist,
- R²: ein C₁-C₁₀-Alkyl ist und
- R³: ein C₁-C₁₀-Alkyl ist
oder 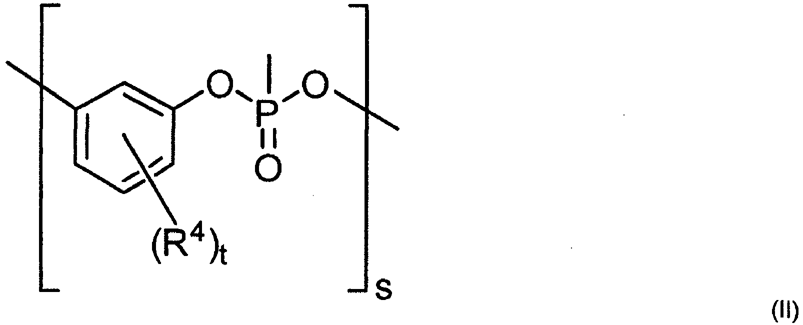 wobei
- s: eine Zahl zwischen 1 und 1000, vorzugsweise zwischen 100 und 600 ist,
- t: eine Zahl zwischen 0 und 4 ist vorzugsweise zwischen 0 und 2, stärker bevorzugt 0 oder 1 und am stärksten bevorzugt 0 ist und
- R⁴: ein C₁-C₁₀-Alkyl ist

Beispiele für das phosphorhaltige Phenol sind die folgenden Verbindungen 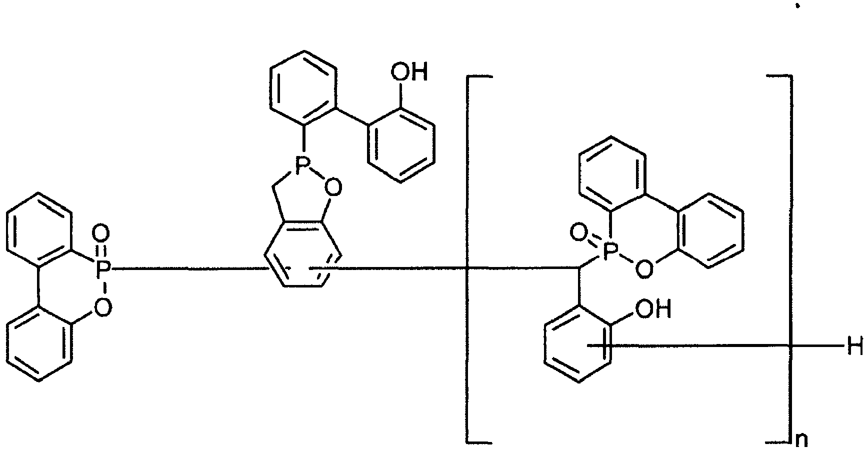 wobei n eine Zahl zwischen 200 und 500 ist
oder 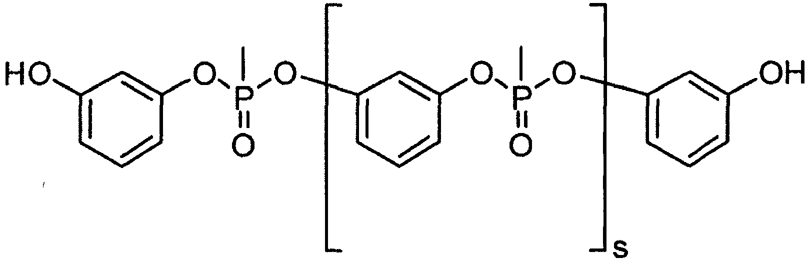 wobei s eine Zahl zwischen 100 und 600 ist.

Durch die freien Hydroxylfunktionalitäten wird die Bildung von Triazinen, ausgehend von Cyanatestern, katalysiert und somit wird der Härteprozess hinsichtlich Dauer und Aushärtegrad optimiert. Zudem sind die Verbindungen gesundheitlich unbedenklich und bewirken, aufgrund ihres hohen Phosphorgehaltes eine hohe Flammbeständigkeit der ausgehärteten Polymermischung.

Beispielsweise ist das phosphorhaltige Epoxid ein (Hydrocarbyl-)-Phosphonsäureester und/oder enthält 9-dihydro-9-oxo-10-phosphaphenanthren-10-oxid als Struktureinheit. Vorzugsweise enthält das phosphorhaltiges Epoxid 9-dihydro-9-oxo-10-phosphaphenanthren-10-oxid als Struktureinheit.

Beispielsweise enthält das phosphorhaltige Epoxid die folgende Struktureinheit (III): 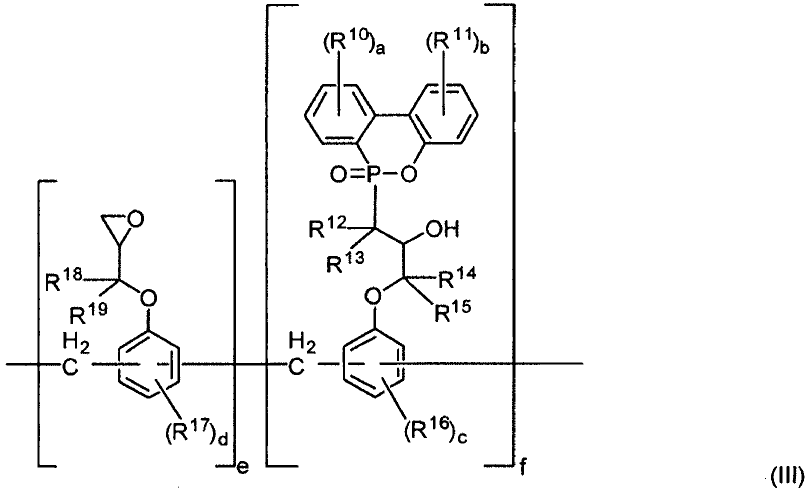 wobei
- a: eine Zahl zwischen 0 und 4 ist vorzugsweise zwischen 0 und 2, stärker bevorzugt 0 oder 1 und am stärksten bevorzugt 0 ist,
- b: eine Zahl zwischen 0 und 4 ist vorzugsweise zwischen 0 und 2, stärker bevorzugt 0 oder 1 und am stärksten bevorzugt 0 ist,
- c: eine Zahl zwischen 0 und 3 ist vorzugsweise zwischen 0 und 2, stärker bevorzugt 0 oder 1 und am stärksten bevorzugt 0 ist,
- d: eine Zahl zwischen 0 und 3 ist vorzugsweise zwischen 0 und 2, stärker bevorzugt 0 oder 1 und am stärksten bevorzugt 0 ist,
- e: eine Zahl zwischen 1 und 1000 ist, vorzugsweise zwischen 200 und 500 ist,
- f: eine Zahl zwischen 1 und 1000 ist, vorzugsweise zwischen 50 und 200 ist,
- R¹⁰: ein C₁-C₁₀Alkyl ist,
- R¹¹: ein C₁-C₁₀-Alkyl ist,
- R¹²: ein C₁-C₁₀-Alkyl oder Wasserstoff ist, vorzugsweise Methyl oder Wasserstoff und am stärksten bevorzugt Wasserstoff,
- R¹³: ein C₁-C₁₀-Alkyl oder Wasserstoff ist, vorzugsweise Methyl oder Wasserstoff und am stärksten bevorzugt Wasserstoff,
- R¹⁴: ein C₁-C₁₀-Alkyl oder Wasserstoff ist, vorzugsweise Methyl oder Wasserstoff und am stärksten bevorzugt Wasserstoff,
- R¹⁵: ein C₁-C₁₀-Alkyl oder Wasserstoff ist, vorzugsweise Methyl oder Wasserstoff und am stärksten bevorzugt Wasserstoff,
- R¹⁶: ein C₁-C₁₀-Alkyl ist,
- R¹⁷: ein C₁-C₁₀-Alkyl ist,
- R¹⁸: ein C₁-C₁₀-Alkyl oder Wasserstoff ist, vorzugsweise Methyl oder Wasserstoff und am stärksten bevorzugt Wasserstoff und
- R¹⁹: ein C₁-C₁₀-Alkyl oder Wasserstoff ist, vorzugsweise Methyl oder Wasserstoff und am stärksten bevorzugt Wasserstoff.

Ein Beispiel für das phosphorhaltige Epoxid ist die folgende Verbindung: 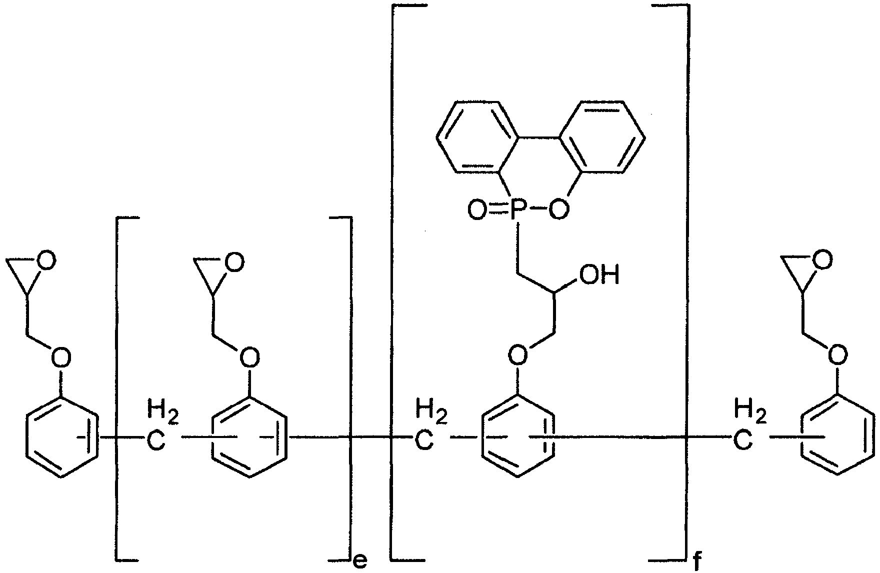
wobei e eine Zahl zwischen 200 und 500 ist und
wobei f eine Zahl zwischen 50 und 200 ist.

Ein derartiges Epoxid stellt ein zusätzliches Epoxid in der Harzmischung dar und somit wird zusätzlich ein Diamin als Härter verwendet.

Das Diamin ist üblicherweise ein aromatisches Diamin vorzugsweise ausgewählt aus der Gruppe umfassend 2,4-Toluylen-diamin, 2,6-Toluylen-diamin, 3,5-Diethyl-2,4-toluylen-diamin, 3,5-Diethyl-2,6-toluylendiamin und primäre mono-, di-, tri- oder tetraalkylsubstituierte 4,4'-Diaminodiphenylmethane, 6-Methyl-2,4-bis(methylthio)phenylen-1,3-diamin und 2-Methyl-4,6-bis(methylthio)phenylen-1,3-diamin.
Da die Komponenten c1) und/oder c2) als Härter fungieren kann auf den Einsatz gesundheitlich bedenklicher Härter und/oder Katalysatoren verzichtet werden.

Die erfindungsgemäße polymerisierbare Duromer-Zusammensetzung enthält daher vorzugsweise keine gesundheitlich bedenklichen Härter und/oder Katalysatoren.

Sollte die erfindungsgemäße polymerisierbare Duromer-Zusammensetzung ein Diamin enthalten so beträgt die Gesamtmenge an Diamin 0,25 bis 5,0 Gew.%, vorzugsweise 0,1 bis 2,0 Gew.-% oder 0,2 bis 1,5 Gew.% bezogen auf die polymerisierbare Duromer-Zusammensetzung. Alternativ umfasst die polymerisierbare Duromer-Zusammensetzung das aromatische Diamin, sofern enthalten, vorzugsweise in einer Menge von beispielsweise 0,4 bis 1,2 Gew.% oder 0,5 bis 1,0 Gew.%.
In einer bevorzugten Ausführungsform ist Komponente c1) anwesend und Komponente c2) abwesend. In dieser Ausführungsform ist ein Diamin als zusätzliche Härterkomponente normalerweise nicht erforderlich. Vorzugsweise enthält die polymerisierbare Duromer-Zusammensetzung dieser Ausführungsform kein Diamin. Die erfindungsgemäßen Zusammensetzungen weisen deutlich verbesserte Flammschutzeigenschaften auf wobei Verbindungen enthaltend Komponente c1) noch bessere Flammschutzeigenschaften gegenüber Zusammensetzungen enthaltend Komponente c2) aufweisen.

Die Gesamtmenge der Komponenten c1) und c2) bezogen auf die polymerisierbare Duromer-Zusammensetzung ist üblicherweise im Bereich von 5,5 bis 20 Gew.%, vorzugsweise im Bereich von 6,0 bis 15 Gew.% und stärker bevorzugt im Bereich von 6,5 bis 12 Gew.%.

Das di- oder polyfunktionelle organische Cyanatesterharz ist beispielsweise ein Cyanat der Formel (IV): 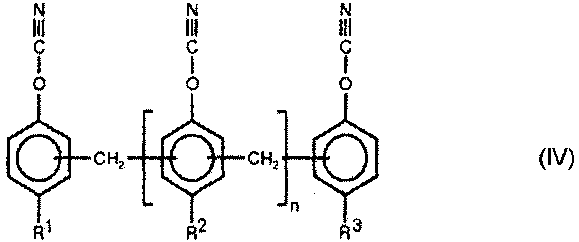 wobei R¹, R² und R³ unabhängig voneinander Wasserstoff oder C₁-C₁₀-Alkyl sind und n eine ganze Zahl von 0 bis 20 darstellt.

Beispielsweise ist das di- oder polyfunktionelle organische Cyanatesterharz ein Cyanat der Formel (IV): 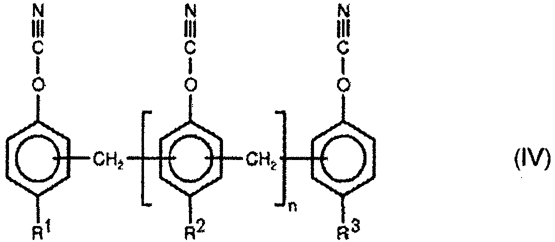 wobei R¹, R² und R³ Wasserstoff sind und n eine ganze Zahl von 0 bis 20 darstellt.

Beispielsweise stellt das naphthalin-basierte Epoxidharz ein polymeres naphthalin-basiertes Epoxidharz dar.

Beispielsweise ist das naphthalin-basierte Epoxidharz ein naphthalin-basiertes Epoxidharz der Formel (V): 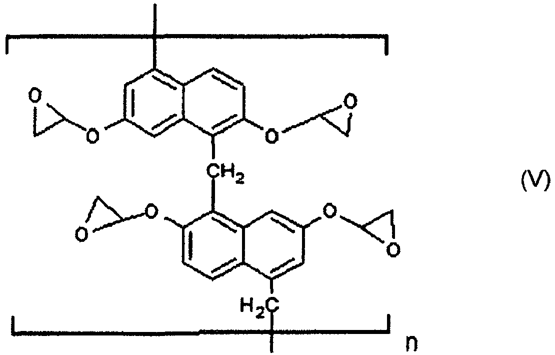 wobei n eine ganze Zahl von 1 bis 50 darstellt.

Beispielsweise enthält die polymerisierbare Duromer-Zusammensetzung das di- oder polyfunktionelle organische Cyanatesterharz und das naphthalin-basierte Epoxidharz in einem Gewichtsverhältnis (Gew./Gew.) von 10:1 bis 1:1 enthält.

Beispielsweise umfasst die polymerisierbare Duromer-Zusammensetzung mindestens ein Hochleistungsthermoplast auch als Schlagzähmodifizierer bezeichnet, vorzugsweise mindestens ein Hochleistungsthermoplast, das ausgewählt ist aus der Gruppe umfassend Polysulfone (PSU), beispielsweise Polyethersulfone (PES) und Polyphenylensulfone (PPSU), Polyetherimid (PEI), Polysulfon (PSU), Polycarbonat (PC), Silikonkautschuk und Mischungen hiervon.
Der Schlagzähmodifizierer kann auch in Form von Core-Shell-partikeln vorliegen vorzugsweise enthaltend mindestens ein Hochleistungsthermoplast, üblicherweise als Kern.
Die Hülle (Shell) der Core-Shell-partikel besteht üblicherweise aus einer Polymermatrix, beispielsweise enthaltend einem Epoxidharz, einem Cyanatester oder Mischungen hiervon. Der Kern enthält, vorzugsweise besteht aus, einem anderen Polymer, beispielsweise ausgewählt aus der Gruppe umfassend, Silikonkautschuk, Nitrilkautschuk, Styrol-Butadien-kautschuk, Polyisoprenkautschuk, Polybutadien, Butylkautschuk, Fluorelastomere, usw. und Mischungen hiervon, beispielsweise aus Silikonkautschuk.

Beispielsweise enthält die polymerisierbare Duromer-Zusammensetzung das di- oder polyfunktionelle organische Cyanatesterharz und das mindestens eine Hochleistungsthermoplast in einem Gewichtsverhältnis (Gew./Gew.) von 100:1 bis 6:1 enthält und/oder die polymerisierbare Duromer-Zusammensetzung das naphthalin-basierte Epoxidharz und das mindestens eine Hochleistungsthermoplast in einem Gewichtsverhältnis (Gew./Gew.) von 50:1 bis 3:1. Im Falle von Core-Shellpartikeln bezieht sich die Gewichtsangabe auf die Gesamtmasse des Core-Shellpartikels.

Die vorliegende Erfindung stellt ferner ein polymerisiertes Duromer zur Verfügung, das ein Reaktionsprodukt der polymerisierbaren Duromer-Zusammensetzung, wie hierin beschrieben, darstellt.

Beispielsweise weist das polymerisierte Duromer eine Glasübergangstemperatur von 280 °C bis 300 °C auf.

Die vorliegende Erfindung stellt ferner ein Verfahren zur Herstellung des polymerisierten Duromers zur Verfügung, das Verfahren umfasst die Schritte
i) Bereitstellung einer polymerisierbaren Duromer-Zusammensetzung, wie hierin beschrieben, und
ii) Polymerisation der polymerisierbaren Duromer-Zusammensetzung bei Temperaturen in einem Bereich von 100 bis 180 °C.

Ferner betrifft die vorliegende Erfindung die Verwendung der polymerisierbaren Duromer-Zusammensetzung, wie hierin beschrieben, zur Herstellung von konstruktiven Leichtbauteilen, vorzugsweise Kohlefaser-Verbundwerkstoffe (CFK). Ebenso betrifft die vorliegende Erfindung ein konstruktives Leichtbauteil, vorzugsweise Kohlefaser-Verbundwerkstoff (CFK), enthaltend das polymerisierte Duromer, wie hierin beschrieben.

### Detaillierte Beschreibung der Erfindung

Die vorliegende Erfindung betrifft eine polymerisierbare Duromer-Zusammensetzung, umfassend
a) ein di- oder polyfunktionelles organisches Cyanatesterharz,
b) ein naphthalin-basiertes Epoxidharz, und
c1) mindestens ein phosphorhaltiges Phenol wie in Anspruch 1 definiert.Die polymerisierbare Duromer-Zusammensetzung kann c2) mindestens ein phosphorhaltiges Epoxid und mindestens ein Diamin umfassen.

Der Begriff "polymerisierbar" bedeutet, dass sich die einzelnen Komponenten der Zusammensetzung unter geeigneten Bedingungen, wie z.B. erhöhter Temperatur oder mit Hilfe von Katalysatoren, polymerisieren lassen.

Der Begriff "Duromer" bezieht sich auf ein Prepolymer, der sich nach seiner Aushärtung bzw. Polymerisierung nicht mehr verformen lässt.

Ein Erfordernis der Erfindung ist, dass die polymerisierbare Duromer-Zusammensetzung
c1) mindestens ein phosphorhaltiges Phenol
enthält.

Das phosphorhaltige Phenol enthält eine der folgenden Struktureinheiten (I) oder (II) 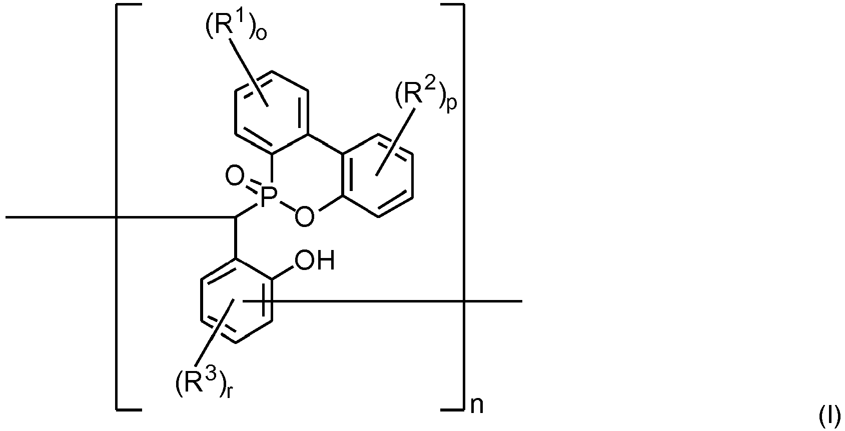 wobei
- n: eine Zahl zwischen 1 und 1000, vorzugsweise zwischen 200 und 500 ist,
- o: eine Zahl zwischen 0 und 4 ist vorzugsweise zwischen 0 und 2, stärker bevorzugt 0 oder 1 und am stärksten bevorzugt 0 ist,
- p: eine Zahl zwischen 0 und 4 ist vorzugsweise zwischen 0 und 2, stärker bevorzugt 0 oder 1 und am stärksten bevorzugt 0 ist,
- r: eine Zahl zwischen 0 und 3 ist vorzugsweise zwischen 0 und 2, stärker bevorzugt 0 oder 1 und am stärksten bevorzugt 0 ist,
- R¹: ein C₁-C₁₀-Alkyl ist,
- R²: ein C₁-C₁₀-Alkyl ist und
- R³: ein C₁-C₁₀-Alkyl ist
oder 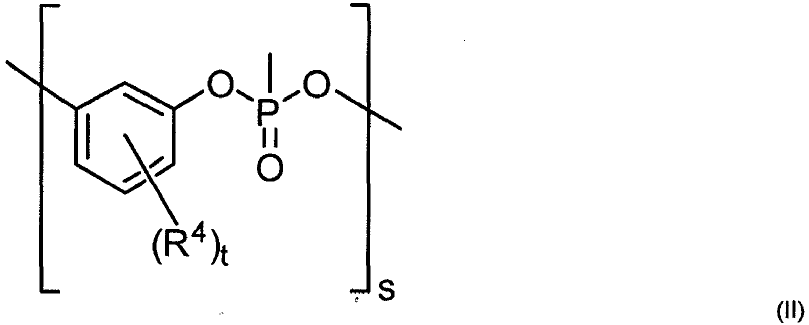 wobei
- s: eine Zahl zwischen 1 und 1000, vorzugsweise zwischen 100 und 600 ist,
- t: eine Zahl zwischen 0 und 4 ist vorzugsweise zwischen 0 und 2, stärker bevorzugt 0 oder 1 und am stärksten bevorzugt 0 ist und
- R⁴: ein C₁-C₁₀-Alkyl ist.

In einer Ausführungsform enthält die polymerisierbare Duromer-Zusammensetzung eine Verbindung enthaltend Struktureinheit (I) wobei n eine Zahl zwischen 1 und 1000, o, p und r jeweils unabhängig voneinander eine Zahl zwischen 0 und 4 sind und R¹, R² und R³ jeweils unabhängig voneinander ein C₁-C₁₀-Alkyl ist.

Die polymerisierbare Duromer-Zusammensetzung kann beispielsweise eine Verbindung enthaltend Struktureinheit (I) enthalten wobei n eine Zahl zwischen 200 und 500, o, p und r jeweils unabhängig voneinander eine Zahl zwischen 0 und 4 sind und R¹, R² und R³ jeweils unabhängig voneinander ein C₁-C₁₀-Alkyl ist.

Der Begriff "Alkyl" bezeichnet in der vorliegenden Erfindung ein Radikal einer gesättigten aliphatischen Gruppe, einschließlich linearer Alkylgruppen und verzweigter Alkylgruppen, wobei die linearen Alkylgruppen und verzweigten Alkylgruppen vorzugsweise nicht substituiert sind.

Die Bindung an der Salizylatgruppe der Struktureinheit gemäß Formel (I) zur nächsten Monomereinheit befindet sich vorzugsweise an ortho-Position zur OH-gruppe.

Vorzugsweise enthält die polymerisierbare Duromer-Zusammensetzung eine Verbindung enthaltend Struktureinheit (I) wobei n eine Zahl zwischen 1 und 1000, o, p und r jeweils unabhängig voneinander eine Zahl zwischen 0 und 4 sind und R¹, R² und R³ jeweils unabhängig voneinander ein C₁-C₁₀-Alkyl ist und die Bindung an der Salizylatgruppe der Struktureinheit gemäß Formel (I) zur nächsten Monomereinheit sich an ortho-Position zur OH-gruppe befindet.

Beispielsweise enthält die polymerisierbare Duromer-Zusammensetzung eine Verbindung enthaltend Struktureinheit (I) wobei n eine Zahl zwischen 200 und 500, o, p und r jeweils unabhängig voneinander eine Zahl zwischen 0 und 4 sind und R¹, R² und R³ jeweils unabhängig voneinander ein C₁-C₁₀-Alkyl ist und die Bindung an der Salizylatgruppe der Struktureinheit gemäß Formel (I) zur nächsten Monomereinheit sich an ortho-Position zur OH-gruppe befindet.

In einer Ausführungsform enthält die polymerisierbare Duromer-Zusammensetzung eine Verbindung enthaltend Struktureinheit (I) wobei n eine Zahl zwischen 1 und 1000, o, p und r jeweils 0 oder 1 sind und R¹, R² und R³ jeweils unabhängig voneinander ein C₁-C₁₀-Alkyl ist. Beispielsweise enthält die polymerisierbare Duromer-Zusammensetzung eine Verbindung enthaltend Struktureinheit (I) wobei n eine Zahl zwischen 1 und 1000, o, p und r jeweils 0 oder 1 sind und R¹, R² und R³ jeweils unabhängig voneinander ein C₁-C₁₀-Alkyl ist und die Bindung an der Salizylatgruppe der Struktureinheit gemäß Formel (I) zur nächsten Monomereinheit sich an ortho-Position zur OH-gruppe befindet.

In einer Ausführungsform enthält die polymerisierbare Duromer-Zusammensetzung eine Verbindung enthaltend Struktureinheit (I) wobei n eine Zahl zwischen 200 und 500, o, p und r jeweils 0 oder 1 sind und R¹, R² und R³ jeweils unabhängig voneinander ein C₁-C₁₀-Alkyl ist. Beispielsweise enthält die polymerisierbare Duromer-Zusammensetzung eine Verbindung enthaltend Struktureinheit (I) wobei n eine Zahl zwischen 200 und 500, o, p und r jeweils 0 oder 1 sind und R¹, R² und R³ jeweils unabhängig voneinander ein C₁-C₁₀-Alkyl ist und die Bindung an der Salizylatgruppe der Struktureinheit gemäß Formel (I) zur nächsten Monomereinheit sich an ortho-Position zur OH-gruppe befindet.

Beispielsweise enthält die polymerisierbare Duromer-Zusammensetzung eine Verbindung enthaltend Struktureinheit (I) wobei n eine Zahl zwischen 1 und 1000 und o, p und r jeweils 0 sind. Beispielsweise enthält die polymerisierbare Duromer-Zusammensetzung eine Verbindung enthaltend Struktureinheit (I) wobei n eine Zahl zwischen 1 und 1000 und o, p und r jeweils 0 sind und die Bindung an der Salizylatgruppe der Struktureinheit gemäß Formel (I) zur nächsten Monomereinheit sich an ortho-Position zur OH-gruppe befindet.

Beispielsweise enthält die polymerisierbare Duromer-Zusammensetzung eine Verbindung enthaltend Struktureinheit (I) wobei n eine Zahl zwischen 200 und 500 und o, p und r jeweils 0 sind. Beispielsweise enthält die polymerisierbare Duromer-Zusammensetzung eine Verbindung enthaltend Struktureinheit (I) wobei n eine Zahl zwischen 200 und 500 und o, p und r jeweils 0 sind und die Bindung an der Salizylatgruppe der Struktureinheit gemäß Formel (I) zur nächsten Monomereinheit sich an ortho-Position zur OH-gruppe befindet.

Beispielsweise enthält die polymerisierbare Duromer-Zusammensetzung eine Verbindung enthaltend Struktureinheit (II), wobei s eine Zahl zwischen 1 und 1000, t eine Zahl zwischen 0 und 4 und R⁴ ein C₁-C₁₀-Alkyl ist.

Beispielsweise enthält die polymerisierbare Duromer-Zusammensetzung eine Verbindung enthaltend Struktureinheit (II), wobei s eine Zahl zwischen 100 und 600, t eine Zahl zwischen 0 und 4 und R⁴ ein C₁-C₁₀-Alkyl ist.

Die polymerisierbare Duromer-Zusammensetzung kann beispielsweise eine Verbindung enthaltend Struktureinheit (II) enthalten, wobei s eine Zahl zwischen 1 und 1000, t eine Zahl zwischen 0 und 2 und R⁴ ein C₁-C₁₀-Alkyl ist.

Die polymerisierbare Duromer-Zusammensetzung kann beispielsweise eine Verbindung enthaltend Struktureinheit (II) enthalten, wobei s eine Zahl zwischen 100 und 600, t eine Zahl zwischen 0 und 2 und R⁴ ein C₁-C₁₀-Alkyl ist.

Die polymerisierbare Duromer-Zusammensetzung kann beispielsweise eine Verbindung enthaltend Struktureinheit (II) enthalten, wobei s eine Zahl zwischen 1 und 1000, t eine Zahl zwischen 0 und 1 und R⁴ ein C₁-C₁₀-Alkyl ist.

Die polymerisierbare Duromer-Zusammensetzung kann beispielsweise eine Verbindung enthaltend Struktureinheit (II) enthalten, wobei s eine Zahl zwischen 100 und 600, t eine Zahl zwischen 0 und 1 und R⁴ ein C₁-C₁₀-Alkyl ist.

Die polymerisierbare Duromer-Zusammensetzung kann beispielsweise eine Verbindung enthaltend Struktureinheit (II) enthalten, wobei s eine Zahl zwischen 1 und 1000 und t = null ist.

Die polymerisierbare Duromer-Zusammensetzung kann beispielsweise eine Verbindung enthaltend Struktureinheit (II) enthalten, wobei s eine Zahl zwischen 100 und 600 und t = null ist.

Beispiele für das phosphorhaltige Phenol sind die folgenden Verbindungen 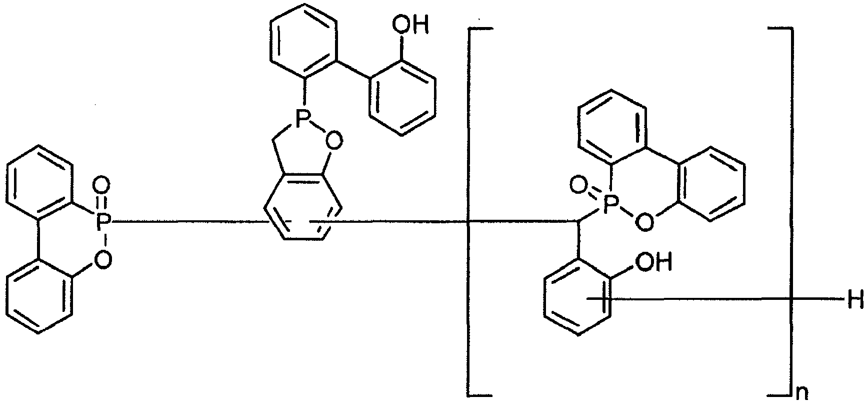 wobei n eine Zahl zwischen 1 und 1000, vorzugsweise zwischen 200 und 500 ist oder 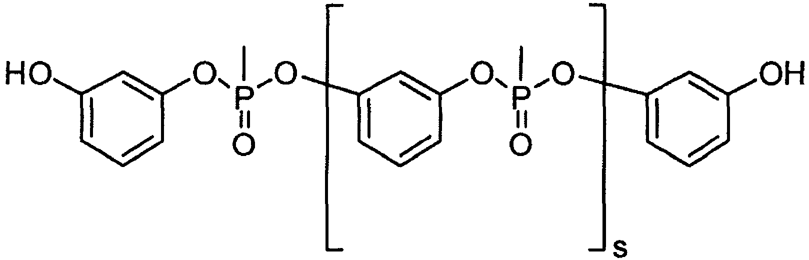 wobei s eine Zahl zwischen 1 und 1000, vorzugsweise zwischen 100 und 600 ist.

Beispielsweise ist das phosphorhaltiges Epoxid ein (Hydrocarbyl-)-Phosphonsäureester und/oder enthält 9-dihydro-9-oxo-10-phosphaphenanthren-10-oxid als Struktureinheit. Vorzugsweise enthält das phosphorhaltiges Epoxid 9-dihydro-9-oxo-10-phosphaphenanthren-10-oxid als Struktureinheit.

Vorzugsweise enthält das phosphorhaltige Epoxid die folgende Struktureinheit (III): 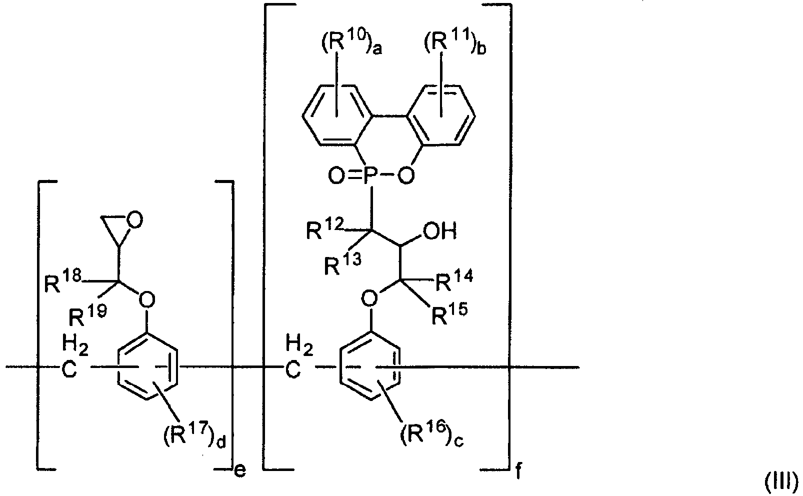 wobei
- a: eine Zahl zwischen 0 und 4 ist vorzugsweise zwischen 0 und 2, stärker bevorzugt 0 oder 1 und am stärksten bevorzugt 0 ist,
- b: eine Zahl zwischen 0 und 4 ist vorzugsweise zwischen 0 und 2, stärker bevorzugt 0 oder 1 und am stärksten bevorzugt 0 ist,
- c: eine Zahl zwischen 0 und 3 ist vorzugsweise zwischen 0 und 2, stärker bevorzugt 0 oder 1 und am stärksten bevorzugt 0 ist,
- d: eine Zahl zwischen 0 und 3 ist vorzugsweise zwischen 0 und 2, stärker bevorzugt 0 oder 1 und am stärksten bevorzugt 0 ist,
- e: eine Zahl zwischen 1 und 1000 ist, vorzugsweise zwischen 200 und 500,
- f: eine Zahl zwischen 1 und 1000 ist, vorzugsweise zwischen 50 und 200,
- R¹⁰: ein C₁-C₁₀-Alkyl ist,
- R¹¹: ein C₁-C₁₀-Alkyl ist,
- R¹²: ein C₁-C₁₀-Alkyl oder Wasserstoff ist, vorzugsweise Methyl oder Wasserstoff und am stärksten bevorzugt Wasserstoff,
- R¹³: ein C₁-C₁₀-Alkyl oder Wasserstoff ist, vorzugsweise Methyl oder Wasserstoff und am stärksten bevorzugt Wasserstoff,
- R¹⁴: ein C₁-C₁₀-Alkyl oder Wasserstoff ist, vorzugsweise Methyl oder Wasserstoff und am stärksten bevorzugt Wasserstoff,
- R¹⁵: ein C₁-C₁₀-Alkyl oder Wasserstoff ist, vorzugsweise Methyl oder Wasserstoff und am stärksten bevorzugt Wasserstoff,
- R¹⁶: ein C₁-C₁₀-Alkyl ist,
- R¹⁷: ein C₁-C₁₀-Alkyl ist,
- R¹⁸: ein C₁-C₁₀-Alkyl oder Wasserstoff ist, vorzugsweise Methyl oder Wasserstoff und am stärksten bevorzugt Wasserstoff und
- R¹⁹: ein C₁-C₁₀-Alkyl oder Wasserstoff ist, vorzugsweise Methyl oder Wasserstoff und am stärksten bevorzugt Wasserstoff.

Die Methylengruppen in Struktureinheit (III) befinden sich jeweils vorzugsweise an ortho-Position zum Sauerstoffatom.

In einer Ausführungsform ist in Struktureinheit (III)
- a: eine Zahl zwischen 0 oder 1, bevorzugt 0,
- b: eine Zahl zwischen 0 oder 1, bevorzugt 0,
- c: eine Zahl zwischen 0 oder 1, bevorzugt 0,
- d: eine Zahl zwischen 0 oder 1, bevorzugt 0,
- e: eine Zahl zwischen 1 und 1000, vorzugsweise zwischen 200 und 500,
- f: eine Zahl zwischen 1 und 1000, vorzugsweise zwischen 50 und 200,
- R¹⁰: ein C₁-C₁₀-Alkyl,
- R¹¹: ein C₁-C₁₀-Alkyl ist,
- R¹²: Methyl oder Wasserstoff, bevorzugt Wasserstoff,
- R¹³: Methyl oder Wasserstoff, bevorzugt Wasserstoff,
- R¹⁴: Methyl oder Wasserstoff, bevorzugt Wasserstoff,
- R¹⁵: Methyl oder Wasserstoff, bevorzugt Wasserstoff,
- R¹⁶: ein C₁-C₁₀-Alkyl ist,
- R¹⁷: ein C₁-C₁₀-Alkyl ist,
- R¹⁸: Methyl oder Wasserstoff, bevorzugt Wasserstoff,
- R¹⁹: Methyl oder Wasserstoff, bevorzugt Wasserstoff.

Beispielsweise ist in Struktureinheit (III)
- a: eine Zahl zwischen 0 oder 1, bevorzugt 0,
- b: eine Zahl zwischen 0 oder 1, bevorzugt 0,
- c: eine Zahl zwischen 0 oder 1, bevorzugt 0,
- d: eine Zahl zwischen 0 oder 1, bevorzugt 0,
- e: eine Zahl zwischen 1 und 1000, vorzugsweise zwischen 200 und 500,
- f: eine Zahl zwischen 1 und 1000, vorzugsweise zwischen 50 und 200,
- R¹⁰: ein C₁-C₁₀-Alkyl,
- R¹¹: ein C₁-C₁₀-Alkyl,
- R¹²: Methyl oder Wasserstoff, bevorzugt Wasserstoff,
- R¹³: Methyl oder Wasserstoff, bevorzugt Wasserstoff,
- R¹⁴: Methyl oder Wasserstoff, bevorzugt Wasserstoff,
- R¹⁵: Methyl oder Wasserstoff, bevorzugt Wasserstoff,
- R¹⁶: ein C₁-C₁₀-Alkyl ist,
- R¹⁷: ein C₁-C₁₀-Alkyl ist,
- R¹⁸: Methyl oder Wasserstoff, bevorzugt Wasserstoff,
- R¹⁹: Methyl oder Wasserstoff, bevorzugt Wasserstoff
und die Methylengruppen in Struktureinheit (III) befinden sich jeweils an ortho-Position zum Sauerstoffatom.

Beispielsweise sind in Struktureinheit (III) a, b, c und e jeweils 0, e eine Zahl zwischen 1 und 1000, f eine Zahl zwischen 1 und 1000 und R¹², R¹³, R¹⁴, R¹⁵, R¹⁸ und R¹⁹ jeweils Wasserstoff. Beispielsweise ist in Struktureinheit (III) a, b, c und e jeweils 0, e eine Zahl zwischen 1 und 1000, f eine Zahl zwischen 1 und 1000 und R¹², R¹³, R¹⁴, R¹⁵, R¹⁸ und R¹⁹ jeweils Wasserstoff und die Methylengruppen befindet sich jeweils an ortho-Position zum Sauerstoffatom

Beispielsweise sind in Struktureinheit (III) a, b, c und e jeweils 0, e eine Zahl zwischen 200 und 500, f eine Zahl zwischen 50 und 200 und R¹², R¹³, R¹⁴, R¹⁵, R¹⁸ und R¹⁹ jeweils Wasserstoff. Beispielsweise ist in Struktureinheit (III) a, b, c und e jeweils 0, e eine Zahl zwischen 200 und 500, f eine Zahl zwischen 50 und 200 und R¹², R¹³, R¹⁴, R¹⁵, R¹⁸ und R¹⁹ jeweils Wasserstoff und die Methylengruppen befindet sich jeweils an ortho-Position zum Sauerstoffatom
Ein Beispiel für das phosphorhaltige Epoxid ist die folgenden Verbindung: 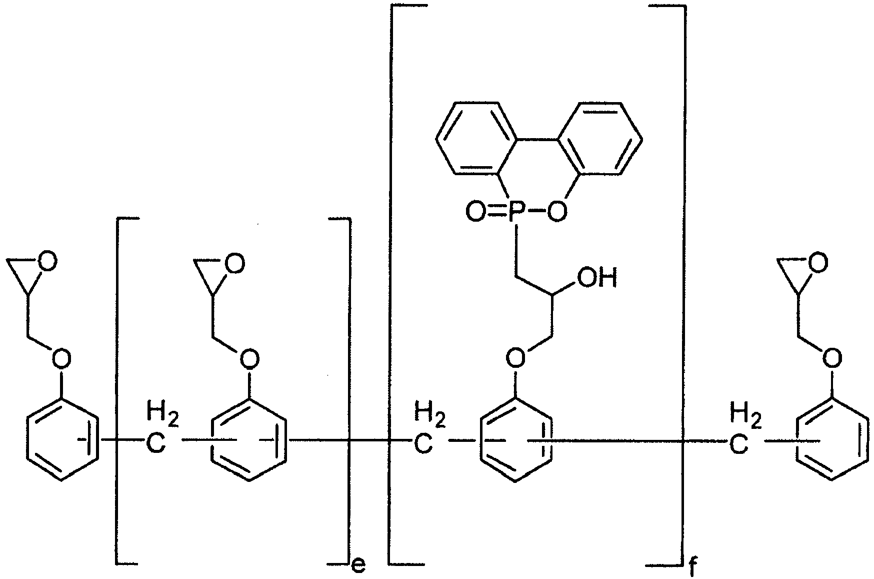
wobei e eine Zahl zwischen 1 und 1000 ist, vorzugsweise zwischen 50 und 200 ist und
wobei f eine Zahl zwischen 1 und 1000 ist, vorzugsweise zwischen 50 und 200 ist und die Methylengruppen sich jeweils vorzugsweise an ortho-Position zum Sauerstoffatom befinden.

Ein derartiges Epoxid stellt ein zusätzliches Epoxid in der Harzmischung dar und somit wird zusätzlich ein Diamin als Härter verwendet.
Das Diamin ist üblicherweise ein aromatisches Diamin vorzugsweise ausgewählt aus der Gruppe umfassend 2,4-Toluylen-diamin, 2,6-Toluylen-diamin, 3,5-Diethyl-2,4-toluylen-diamin, 3,5-Diethyl-2,6-toluylendiamin und primäre mono-, di-, tri- oder tetraalkylsubstituierte 4,4'-Diaminodiphenylmethane, 6-Methyl-2,4-bis(methylthio)phenylen-1,3-diamin und 2-Methyl-4,6-bis(methylthio)phenylen-1,3-diamin.
Sollte die erfindungsgemäße polymerisierbare Duromer-Zusammensetzung ein Diamin enthalten so beträgt die Gesamtmenge an Diamin 0,25 bis 5,0 Gew.%, vorzugsweise 0,1 bis 2,0 Gew.-% oder 0,2 bis 1,5 Gew.% bezogen auf die polymerisierbare Duromer-Zusammensetzung. Alternativ umfasst die polymerisierbare Duromer-Zusammensetzung das aromatische Diamin vorzugsweise in einer Menge von beispielsweise 0,4 bis 1,2 Gew.% oder 0,5 bis 1,0 Gew.%.
In einer bevorzugten Ausführungsform ist Komponente c1) anwesend und Komponente c2) abwesend. In dieser Ausführungsform ist ein Diamin als zusätzliche Härterkomponente normalerweise nicht erforderlich. Vorzugsweise enthält die polymerisierbare Duromer-Zusammensetzung dieser Ausführungsform kein Diamin.

Die Gesamtmenge der Komponenten c1) und c2) bezogen auf die polymerisierbare Duromer-Zusammensetzung ist üblicherweise im Bereich von 5,5 bis 20 Gew.%, vorzugsweise im Bereich von 6.0 bis 15 Gew.% und stärker bevorzugt im Bereich von 6.5 bis 12 Gew.%.

Da die Komponenten c1) und/oder c2) als Härter fungieren, kann auf den Einsatz gesundheitlich bedenklicher Härter und/oder Katalysatoren verzichtet werden. Die erfindungsgemäße polymerisierbare Duromer-Zusammensetzung enthält vorzugsweise keine gesundheitlich bedenklichen Härter und/oder Katalysatoren. Ein weiteres Erfordernis der vorliegenden Erfindung ist, dass die polymerisierbare Duromer-Zusammensetzung ein di- oder polyfunktionelles organisches Cyanatesterharz umfasst.

Die Auswahl des di- oder polyfunktionellen organischen Cyanatesterharzes ist nicht kritisch. Prinzipiell kann jedes mindestens difunktionelle Cyanatesterharz eingesetzt werden. Vorzugsweise werden jedoch di- oder polyfunktionelle organische Cyanatesterharze der Formel (IV) eingesetzt: 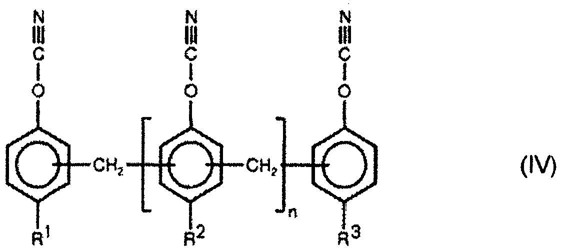 wobei R¹, R² und R³ unabhängig voneinander Wasserstoff oder C₁-C₁₀-Alkyl sind und n eine ganze Zahl von 0 bis 20 darstellt.

In einer Ausführungsform der vorliegenden Erfindung ist das di- oder polyfunktionelle organische Cyanatesterharz ein Cyanat der Formel (IV), wobei R¹, R² und R³ unabhängig voneinander Wasserstoff oder C₁-C₁₀-Alkyl sind und n eine ganze Zahl von 0 bis 10 darstellt. Vorzugsweise ist das di- oder polyfunktionelle organische Cyanatesterharz ein Cyanat der Formel (IV), wobei R¹, R² und R³ unabhängig voneinander Wasserstoff oder C₁-C₁₀-Alkyl sind und n eine ganze Zahl von 1 bis 5 darstellt.

Die Methylengruppe in Formel (IV) kann jeweils in ortho-Position zur Cyanatgruppe stehen. Vorzugsweise steht die Methylengruppe in Formel (IV) jeweils in ortho-Position zur Cyanatgruppe.

Beispielsweise ist das di- oder polyfunktionelle organische Cyanatesterharz ein Cyanat der Formel (IV), wobei R¹, R² und R³ Wasserstoff oder C₁-C₁₀-Alkyl sind und n eine ganze Zahl von 0 bis 20 darstellt. Alternativ ist das di- oder polyfunktionelle organische Cyanatesterharz ein Cyanat der Formel (IV), wobei R¹, R² und R³ Wasserstoff oder C₁-C₁₀-Alkyl sind und n eine ganze Zahl von 0 bis 10 darstellt. Vorzugsweise ist das di- oder polyfunktionelle organische Cyanatesterharz ein Cyanat der Formel (IV), wobei R¹, R² und R³ Wasserstoff oder C₁-C₁₀-Alkyl sind und n eine ganze Zahl von 1 bis 5 darstellt. Beispielsweise ist das di- oder polyfunktionelle organische Cyanatesterharz ein Cyanat der Formel (IV), wobei R¹, R² und R³ Wasserstoff oder C₁-C₁₀-Alkyl sind und n eine ganze Zahl von 1 bis 5 darstellt und die Methylengruppe jeweils in ortho-Position zur Cyanatgruppe steht.

In einer Ausführungsform der vorliegenden Erfindung ist das di- oder polyfunktionelle organische Cyanatesterharz ein Cyanat der Formel (IV); 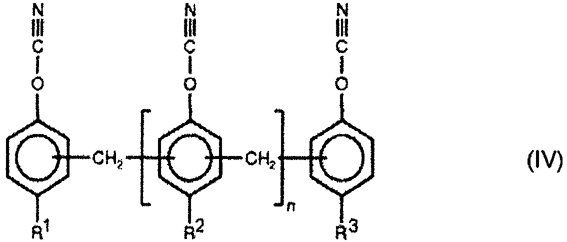 wobei R¹, R² und R³ Wasserstoff sind und n eine ganze Zahl von 0 bis 20 darstellt.

Beispielsweise ist das di- oder polyfunktionelle organische Cyanatesterharz ein Cyanat der Formel (IV), wobei R¹, R² und R³ Wasserstoff sind und n eine ganze Zahl von 0 bis 10 darstellt. Vorzugsweise ist das di- oder polyfunktionelle organische Cyanatesterharz ein Cyanat der Formel (IV), wobei R¹, R² und R³ Wasserstoff sind und n eine ganze Zahl von 1 bis 5 darstellt.

In einer Ausführungsform der vorliegenden Erfindung ist das di- oder polyfunktionelle organische Cyanatesterharz ein Cyanat der Formel (IV), wobei R¹, R² und R³ Wasserstoff sind und n 1, 2 oder 3 darstellt. Beispielsweise ist das di- oder polyfunktionelle organische Cyanatesterharz ein Cyanat der Formel (IV), wobei R¹, R² und R³ Wasserstoff sind und n 1, 2 oder 3 darstellt und die Methylengruppe jeweils in ortho-Position zur Cyanatgruppe steht.

Die genannten di- oder polyfunktionellen organischen Cyanatesterharze der Formel (I) können als Monomere oder als Prepolymere, allein oder in Mischungen untereinander eingesetzt werden.

Die polymerisierbare Duromer-Zusammensetzung umfasst das di- oder polyfunktionelle organische Cyanatesterharz vorzugsweise in einer Menge von beispielsweise 50 bis 80 Gew.-% oder 55 bis 75 Gew.-%, bezogen auf das Gesamtgewicht der Zusammensetzung. Alternativ umfasst die polymerisierbare Duromer-Zusammensetzung das di- oder polyfunktionelle organische Cyanatesterharz vorzugsweise in einer Menge von beispielsweise 55 bis 70 Gew.-% oder 60 bis 65 Gew.-%, bezogen auf das Gesamtgewicht der Zusammensetzung.

Ein weiteres Erfordernis der vorliegenden Erfindung ist, dass die polymerisierbare Duromer-Zusammensetzung ein naphthalin-basiertes Epoxidharz umfasst.

Prinzipiell kann jedes naphthalin-basierte Epoxidharz eingesetzt werden. Vorzugsweise werden jedoch naphthalin-basierte Epoxidharze eingesetzt, die vier Glycidylether-Funktionalitäten pro Wiederholungseinheit aufweisen. Diese hohe Anzahl von Glycidylether-Funktionalitäten ist insbesondere vorteilhaft um ein Duromer mit hoher Vernetzungsdichte zu erhalten.

In einer Ausführungsform der vorliegenden Erfindung ist das naphthalin-basierte Epoxidharz ein polymeres naphthalin-basiertes Epoxidharz.

Beispeilsweise ist das naphthalin-basierte Epoxidharz ein naphthalin-basiertes Epoxidharz der Formel (V): 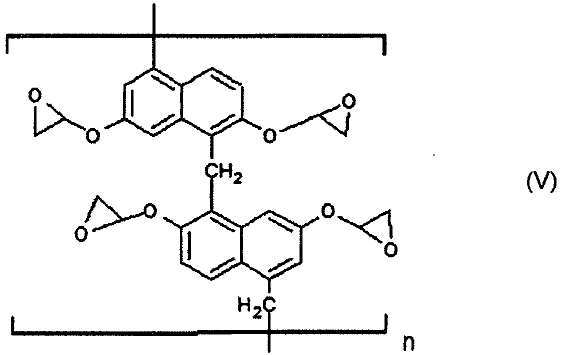 wobei n eine ganze Zahl von 1 bis 50 darstellt.

Vorzugsweise ist das naphthalin-basierte Epoxidharz ein naphthalin-basiertes Epoxidharz der Formel (V), wobei n eine ganze Zahl von 1 bis 40 oder 1 bis 20 darstellt. Alternativ ist das naphthalin-basierte Epoxidharz ein naphthalin-basiertes Epoxidharz der Formel (V), wobei n eine ganze Zahl von 1 bis 10 oder 1 bis 5 darstellt.

Die genannten naphthalin-basierten Epoxidharze der Formel (V) können als Monomere oder als Prepolymere, allein oder in Mischungen untereinander eingesetzt werden.

Die polymerisierbare Duromer-Zusammensetzung umfasst das naphthalin-basierte Epoxidharz vorzugsweise in einer Menge von beispielsweise 19.9 bis 48 Gew.-% oder 24.8 bis 43.5 Gew.-%, bezogen auf das Gesamtgewicht der Zusammensetzung. Alternativ umfasst die polymerisierbare Duromer-Zusammensetzung das naphthalin-basierte Epoxidharz vorzugsweise in einer Menge von beispielsweise 29.6 bis 43.8 Gew.-% oder 29.6 bis 35 Gew.-%, bezogen auf das Gesamtgewicht der Zusammensetzung.

Um ein polymerisiertes Duromer mit hoher Temperaturbeständigkeit zu erhalten, ist es vorteilhaft, wenn die polymerisierbare Duromer-Zusammensetzung das di- oder polyfunktionelle organische Cyanatesterharz und das naphthalin-basierte Epoxidharz in einem bestimmten Gewichtsverhältnis enthält.

Vorzugsweise enthält die polymerisierbare Duromer-Zusammensetzung das di- oder polyfunktionelle organische Cyanatesterharz und das naphthalin-basierte Epoxidharz daher in einem Gewichtsverhältnis (Gew./Gew.) von 10:1 bis 1:1. Beispielsweise enthält die polymerisierbare Duromer-Zusammensetzung das di- oder polyfunktionelle organische Cyanatesterharz und das naphthalin-basierte Epoxidharz in einem Gewichtsverhältnis (Gew./Gew.) von 7:1 bis 1:1 oder von 5:1 bis 1:1. In einer Ausführungsform der vorliegenden Erfindung enthält die polymerisierbare Duromer-Zusammensetzung das di- oder polyfunktionelle organische Cyanatesterharz und das naphthalin-basierte Epoxidharz in einem Gewichtsverhältnis (Gew./Gew.) von ungefähr 2:1.

In einer Ausführungsform der vorliegenden Erfindung, weist das naphthalin-basierte Epoxidharz einen EEW von 100 bis 500 g/eq, vorzugsweise von 125 bis 300 g/eq und ganz besonders bevorzugt von 150 bis 200 g/eq.

Um ein polymerisiertes Duromer mit hoher Schlagfestigkeit zu erhalten, ist es vorteilhaft, wenn die polymerisierbare Duromer-Zusammensetzung mindestens ein Hochleistungsthermoplast, auch als Schlagzähmodifizierer bezeichnet, umfasst.

Ein "Hochleistungsthermoplast" im Sinne der vorliegenden Erfindung ist ein Thermoplast, mit dem die Schlagfestigkeit des polymerisierten Duromers modifiziert werden kann, vorzugsweise erhöht werden kann.

In einer Ausführungsform der vorliegenden Erfindung umfasst die polymerisierbare Duromer-Zusammensetzung daher
a) ein di- oder polyfunktionelles organisches Cyanatesterharz,
b) ein naphthalin-basiertes Epoxidharz, und
c1) mindestens ein phosphorhaltiges Phenol
   und zusätzlich
d) mindestens ein Hochleistungsthermoplast.
Zusätzlich kann die die polymerisierbare Duromer-Zusammensetzung c2) mindestens ein phosphorhaltiges Epoxid und mindestens ein Diamin umfassen. Beispielsweise umfasst die polymerisierbare Duromer-Zusammensetzung mindestens ein Hochleistungsthermoplast auch als Schlagzähmodifizierer bezeichnet ausgewählt aus der Gruppe umfassend Polysulfone (PSU), beispielsweise Polyethersulfone (PES) und Polyphenylensulfone (PPSU), Polyetherimid (PEI), Polysulfon (PSU), Polycarbonat (PC), Silikonkautschuk und Mischungen hiervon.
Der Hochleistungsthermoplast kann auch in Form von Core-Shell-partikeln vorliegen vorzugsweise enthaltend mindestens ein Hochleistungsthermoplast wie oben beschrieben, üblicherweise als Kern.

Beispielsweise umfasst die polymerisierbare Duromer-Zusammensetzung Silikonkautschuk als Hochleistungsthermoplast, vorzugsweise in Form von Core-Shellpartikeln.

Die Hülle (Shell) der Core-Shell-partikel besteht üblicherweise aus einer Polymermatrix, beispielsweise enthaltend einem Epoxidharz, einem Cyanatester oder Mischungen hiervon. Der Kern enthält, vorzugsweise besteht aus, einem anderen Polymer, beispielsweise ausgewählt aus der Gruppe umfassend, Silikonkautschuk, Nitrilkautschuk, Styrol-Butadien-kautschuk, Polyisoprenkautschuk, Polybutadien, Butylkautschuk,Fluorelastomere, usw. und Mischungen hiervon, beispielsweise aus Silikonkautschuk.

Beispielsweise enthält der Kern, vorzugsweise besteht aus, Silikonkautschuk und die Hülle enthält, vorzugsweise besteht aus, einem Epoxidharz. Alternativ enthält der Kern, vorzugsweise besteht aus, Silikonkautschuk und die Hülle enthält, vorzugsweise besteht aus, einem Cyanatester.
Im Falle eines Epoxidharzes beträgt dessen EEW (epoxy equivalent weight) üblicherweise zwischen 200 und 350 g/eq.

Das Gewichtsverhältnis zwischen Kern und Hülle der Core-Shell-Partikel beträgt beispielsweise 25:75 bis 75:25, vorzugsweise 30:70 bis 60:40, stärker bevorzugt 35:65 bis 50:50.

Beispiele für geeignete Core-Shell-partikeln sind Albidur® EP 5341, Albidur® EP 2240A und Albidur® XP 10669. Die Darstellung und der Einsatz dieser Additive ist in "Fibre-reinforced composites based on epoxy resins modified with elastomers and surface-modified silica nanoparticles", Journal of Material Science 2013 (Stephan Sprenger) nachzulesen.

Die polymerisierbare Duromer-Zusammensetzung umfasst das mindestens eine Hochleistungsthermoplast vorzugsweise in einer Menge von beispielsweise 0,1 bis 20 Gew.-% oder 0,5 bis 15 Gew.-%, bezogen auf das Gesamtgewicht der Zusammensetzung. Alternativ umfasst die polymerisierbare Duromer-Zusammensetzung das mindestens eine Hochleistungsthermoplast vorzugsweise in einer Menge von beispielsweise 1,0 bis 18 Gew.-% oder 2,0 bis 14 Gew.-%, bezogen auf das Gesamtgewicht der Zusammensetzung.
Im Falle von Core-Shellpartikeln bezieht sich die Gewichtsangabe auf die Gesamtmasse des Core-Shellpartikels.

Um ein polymerisiertes Duromer mit hoher Schlagfestigkeit zu erhalten, ist es vorteilhaft, wenn die polymerisierbare Duromer-Zusammensetzung die Mischung aus di- oder polyfunktionellem organischem Cyanatesterharz und naphthalin-basiertem Epoxidharz und das mindestens eine Hochleistungsthermoplast in einem bestimmten Gewichtsverhältnis enthält.

Beispielsweise enthält die polymerisierbare Duromer-Zusammensetzung die Mischung aus di- oder polyfunktionellem organischem Cyanatesterharz und naphthalin-basiertem Epoxidharz und das mindestens eine Hochleistungsthermoplast in einem Gewichtsverhältnis (Gew./Gew.) von 100:1 bis 3:1. In einer Ausführungsform der vorliegenden Erfindung enthält die polymerisierbare Duromer-Zusammensetzung die Mischung aus di- oder polyfunktionellem organischem Cyanatesterharz und naphthalin-basiertem Epoxidharz und das mindestens eine Hochleistungsthermoplast in einem Gewichtsverhältnis (Gew./Gew.) von 50:1 bis 3:1 oder von 40:1 bis 5:1. Vorzugsweise enthält die polymerisierbare Duromer-Zusammensetzung die Mischung aus di- oder polyfunktionellem organischem Cyanatesterharz und naphthalin-basiertem Epoxidharz und das mindestens eine Hochleistungsthermoplast in einem Gewichtsverhältnis (Gew./Gew.) von 33:1 bis 10:1.

Der polymerisierbaren Duromer-Zusammensetzung können noch weitere Hilfsmittel und Zusatzstoffe zugesetzt werden. Beispielsweise können der polymerisierbaren Duromer-Zusammensetzung Gleitmittel wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe zur Beeinflussung mechanischer und/oder dielektrischer Eigenschaften und Verstärkungsmittel zugesetzt werden. Als Verstärkungsmittel können beispielsweise faserartige Verstärkungsmittel wie anorganische Fasern, die nach dem Stand der Technik hergestellt werden, zugesetzt werden. Beispielsweise umfasst die polymerisierbare Duromer-Zusammensetzung Kohlefasern.

Aufgrund der Vorteile, die die polymerisierbare Duromer-Zusammensetzung bietet, betrifft die vorliegende Erfindung auch ein polymerisiertes Duromer, das ein Reaktionsprodukt der polymerisierbaren Duromer-Zusammensetzung, wie hierin beschrieben, darstellt.

Das polymerisierte Duromer bietet den Vorteil, dass es eine hohe Temperaturbeständigkeit aufweist. Insbesondere weist das polymerisierte Duromer eine im Vergleich zu reinen Epoxidharzen erhöhte Temperaturbeständigkeit auf. Des Weiteren weist das polymerisierte Duromer eine hohe Glasübergangstemperatur auf. Insbesondere weist das polymerisierte Duromer eine im Vergleich zu bisher bekannten CE/Epoxid-Kombinationen erhöhte Glasübergangstemperatur auf.

Typischerweise weist das erfindungsgemäße polymerisierte Duromer eine Glasübergangstemperatur von 285 °C bis 300 °C auf.

Zusätzlich oder alterntiv weist das erfindungsgemäße polymerisierte Duromer eine Aushärtetemperatur in einem Bereich von 100 bis 180 °C auf. Vorzugsweise weist das erfindungsgemäße polymerisierte Duromer eine Aushärtetemperatur in einem Bereich von 125 bis 175 °C auf.

In einer Ausführungsform der vorliegenden Erfindung weist das erfindungsgemäße polymerisierte Duromer eine Dichte in einem Bereich von 1.20 bis 1.35 g/cm³ und vorzugsweise in einem Bereich von 1.25 bis 1.30 g/cm³ auf.

Zusätzlich oder alterntiv weist das erfindungsgemäße polymerisierte Duromer eine Wasseraufnahmekapazität in einem Bereich von 1.2 bis 1.35 wt.-%, basierend auf dem Gesamtgewicht des polymerisierten Duromers, auf.

In einer Ausführungsform der vorliegenden Erfindung weist das erfindungsgemäße polymerisierte Duromer eine Degrationstemperatur in einem Bereich von 350 bis 400 °C und vorzugsweise in einem Bereich von 360 bis 380 °C auf.

Vorzugsweise verlöscht eine vertikal eingespannte Probe des erfindungsgemäß polymerisierten Duromers innerhalb von nicht mehr als 30 Sekunden und ohne brennendes Abtropfen der Kunststoffschmelze, bestimmt nach dem "Vertical Burn Test" gemäß DIN EN 60695-11-10.

Ein weiterer Aspekt der vorliegenden Erfindung betrifft ein Verfahren zur Herstellung eines polymerisierten Duromers, wie hierin beschrieben. Das Verfahren umfassend die Schritte
i) Bereitstellung einer polymerisierbaren Duromer-Zusammensetzung, wie hierin beschrieben,
ii) Polymerisation der polymerisierbaren Duromer-Zusammensetzung bei Temperaturen in einem Bereich von 100 bis 180 °C.

Die erfindungsgemäße polymerisierbare Duromer-Zusammensetzung kann im Allgemeinen durch Vermischen des di- oder polyfunktionellen organischen Cyanatesterharzes, des naphthalin-basierten Epoxidharzes, des mindestens einen mindestens ein phosphorhaltiges Phenol und/oder des mindestens einen phosphorhaltigen Epoxids und mindestens einen Diamins und optionaler Zusatzstoffe, wie beispielsweise des mindestens einen Hochleistungsthermoplasten, bereitgestellt werden. In einer Ausführungsform der vorliegenden Erfindung wird die erfindungsgemäße polymerisierbare Duromer-Zusammensetzung in eine bevorzugte Form oder in einen Hohlraum gegossen und dann dort auspolymerisiert. Die Polymerisation erfolgt bei Temperaturen in einem Bereich von 100 bis 180 °C oder von 125 bis 175 °C, beispielsweise bei ungfähr 150 °C, vorzugsweise für insgesamt 1 bis 10 Stunden oder für 2 bis 5 Stunden. Das Polymerisieren kann in einem einzigen kontinuierlichen Vorgang oder in mehreren verschiedenen und zeitlich getrennten Schritten ausgeführt werden. Vorzugsweise erfolgt das Polymerisieren in einem einzigen kontinuierlichen Vorgang.

In einer Ausführungsform der vorliegenden Erfindung umfasst das Verfahren zur Herstellung eines polymerisierten Duromers einen Nachhärtungs-Schritt iii), in dem das polymerisierte Duromer nachgehärtet wird. Das Nachhärten erfolgt bei Temperaturen in einem Bereich von 200 bis 280 °C oder von 200 bis 250 °C, beispielsweise bei ungfähr 220 °C, vorzugsweise für insgesamt 1 bis 10 Stunden oder für 2 bis 5 Stunden. Das Nachhärten kann in einem einzigen kontinuierlichen Vorgang oder in mehreren verschiedenen und zeitlich getrennten Schritten ausgeführt werden. Vorzugsweise erfolgt das Nachhärten in einem einzigen kontinuierlichen Vorgang.

Aufgrund der Vorteile, die das erfindungsgemäße polymerisierte Duromer bietet, betrifft die vorliegende Erfindung auch die Verwendung der polymerisierbaren Duromer-Zusammensetzung, wie hierin beschrieben, zur Herstellung von konstruktiven Leichtbauteilen, vorzugsweise Kohlefaser-Verbundwerkstoffe (CFK). Beispielsweise wird das polymerisierte Duromer als konstruktives Leichtbauteil in thermisch belasteten und strukturell tragenden Leichtbauteilen verwendet, die erhöhten Temperaturen ausgesetzt sind, beispielsweise Temperaturen von mehr als 200 °C. Insbesondere wird das polymerisierte Duromer als konstruktives Leichtbauteil in der Luft- und Raumfahrt eingesetzt werden. Beispielsweise wird das polymerisierte Duromer als konstruktives Leichtbauteil in Satelliten, Raketen, Luftfahrzeugen, wie Passagierflugzeugen oder Helikoptern, in Schienenfahrzeugen, wie Züge, Wasserfahrzeugen, wie Passagierschiffe, oder Strassenfahrzeugen, wie Autos, verwendet.

Ein weiterer Aspekt der vorliegenden Erfindung betrifft daher ein konstruktives Leichtbauteil, vorzugsweise Kohlefaser-Verbundwerkstoff (CFK), enthaltend das polymerisierte Duromer, wie hierin beschrieben.

Wie vorstehend ausgeführt können durch die erfindungsgemäße polymerisierbare Duromer-Zusammensetzung, polymerisierte Duromere erhalten werden, die hochtemperaturbeständig sind und eine hohe Glasübergangstemperatur und Schlagfestigkeit aufweisen. Ferner kann die erfindungsgemäße polymerisierbare Duromer-Zusammensetzung bei moderaten Temperaturen ausgehärtet werden und weist gleichzeitig eine verbesserte Hydrolysebeständigkeit auf. Des Weiteren enthält die erfindungsgemäße polymerisierbare Duromer-Zusammensetzung keine gesundheitlich bedenklichen Härter und/oder Katalysatoren.

### Kurze Beschreibung der Figuren

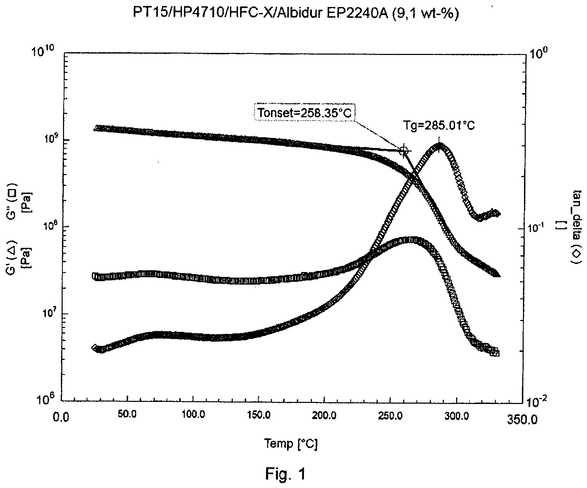

Fig. 1 stellt ein DMA Spektrum der Zusammensetzung PT15/HP4710/HFC-X = (1/0.5)/0,07 ferner enthaltend 9.1 Gew.% Albidur® EP 2240A dar.

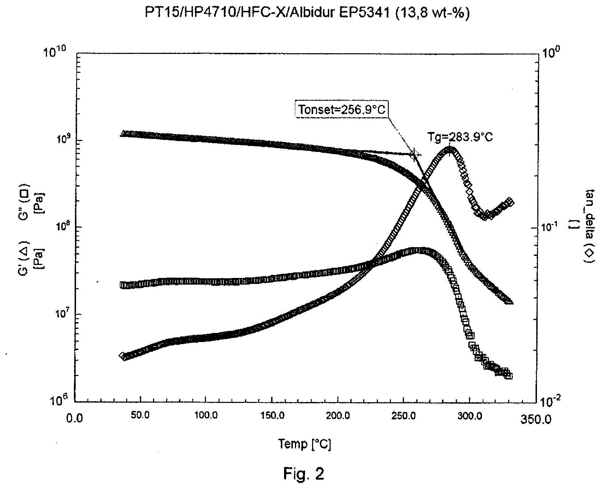

Fig. 2 stellt ein DMA Spektrum der Zusammensetzung PT15/HP4710/HFC-X = (1/0.5)/0,07 ferner enthaltend 13,8 Gew.% Albidur® EP 5341 dar.

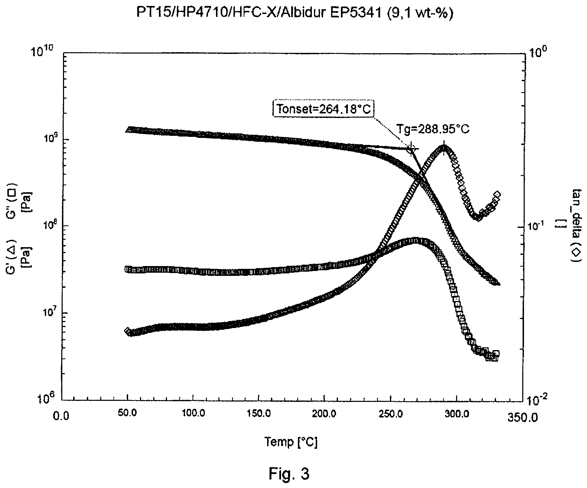

Fig. 3 stellt ein DMA Spektrum der Zusammensetzung PT15/HP4710/HFC-X = (1/0.5)/0,07 ferner enthaltend 9,1 Gew.% Albidur® EP 5341 dar.

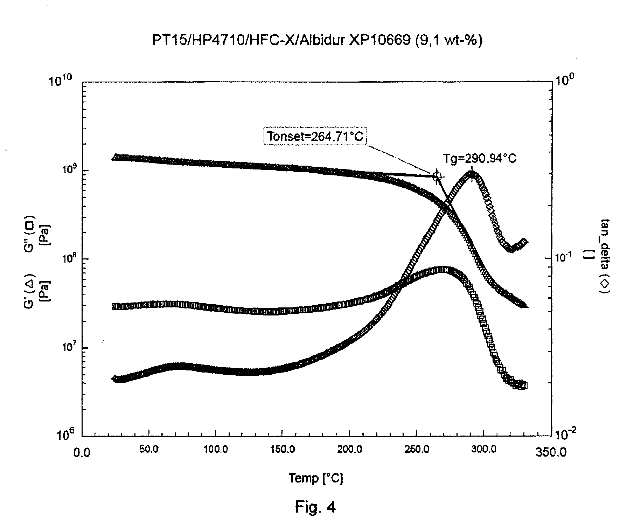

Fig. 4 stellt ein DMA Spektrum der Zusammensetzung PT15/HP4710/HFC-X = (1/0.5)/0,07 ferner enthaltend 9,1 Gew.% Albidur® XP10669 dar.

Nachfolgend wird die Erfindung anhand von Beispielen näher erläutert:

### Beispiele

### 1. Methoden

### a) DSC-Messungen

DSC-Messungen wurden mit Hilfe des Gerätes "DSC Q2000" der Firma TA Instruments angefertigt. Die Spektren wurden mit Hilfe der Software "Thermal Advantage Release 5.4.0" aufgezeichnet und mit der Software "Universal Analysis 2000, Version 4.5A" der Firma TA Instruments ausgewertet. Die Heizrate betrug 5 K/min, bei einer Temperatur von 20°C bis 350°C.

### b) TGA-Messungen

TGA-Messungen wurden mit Hilfe des Gerätes "TGA Q5000" der Firma TA Instruments angefertigt. Die Spektren wurden mit Hilfe der Software "Thermal Advantage Release 5.4.0" aufgezeichnet und mit der Software "Universal Analysis 2000, Version 4.5A" der Firma TA Instruments ausgewertet. Die Heizrate betrug 10 K/min, bei einer Temperatur von 20°C bis 1000°C. Die Messungen wurden jeweils unter Inertgasathmosphäre (N2) und unter Sauertsoffathmosphäre (Raumluft) durchgeführt.

### c) DMA- und Rheologie-Messungen

Viskositätsmessungen und die Bestimmung der Glasübergangstemperaturen (Tg) der Materialien wurden mit Hilfe des Rheometers "Advanced Rheometric Expansion System (ARES)" der Firma *Rheometric Scientific* angefertigt. Zur Auswertung wurde die Software "Rheometric Scientific, Version V6.5.8" verwendet. Die Heizraten betrugen in allen Fällen 3 K/min. Der Glasübergang entspricht dem Maximum der tan(δ)-Funktion.

### d) UL-94 Brandtest

Die Brandeigenschaften der Materialien wurden nach DIN EN 60695-11-10 mittels "Vertical Burn Test" bestimmt. Die Beflammzeit betrug bis zu 60 sec.

### 2. Eingesetzte Materialien

Primaset® PT15 (erhältlich von Lonza) ist ein Oligo (3-methylen-1,5-phenylcyanat).
Epiclon® HP-4710 (erhältlich von DIC Corporation) ist ein Oligo(1,1',5,5'-bis-(2,7-diglycidyloxy-1-naphthyl)methane) mit einem EEW von 170 g/eq.
Epiclon® HFC-X (erhältlich von DIC Corporation) ist ein Phosphororganisches phenolisches Harz mit einem OH-Äquivalentengewicht von 428 g/eq und einem Phosphorgehalt von 10,4 wt-%.
XP3775 (erhältlich von Schill+Seilacher "Struktol" GmbH) ist ein DOPOmodifizierter Novolak mit einem Phosphoranteil von 7,5 wt-% und einem EEW < 2000 g/eq.
Fyrol® PMP (erhältlich von ICL) ist ein Poly(m-phenylmethylphosphonat) mit einem Phosphoranteil von 17,5%.
Core-Shell-partikel:
Albidur® EP 5341 ist eine Dispersion eines hochleistungsfähigen Elastomers in einem cycloaliphatischen Epoxidharz mit einem Silikonkautschukgehalt von 40 wt-% und einem EEW von 225-255 g/eq.
Albidur® EP 2240A ist eine Dispersion eines hochleistungsfähigen Elastomers in einem Epoxidharz basierend auf Bisphenol A mit einem Silikonkautschukgehalt von 40 wt-% und einem EEW von 290-315 g/eq.
Albidur® XP10669 ist eine Dispersion eines hochleistungsfähigen Elastomers in einem Cyanatester bestehend aus 4,4'-Ethylidendiphenyldicyanat. Der Silikonkautschukgehalt beträgt 40 wt-% und der Gehalt an 4,4'-Ethylidendiphenyldicyanat beträgt 60 wt-%.

### Darstellung der Materialien

Die Harze Primaset PT15, Epiclon HP 47110, der entsprechende phsophororganische Modifier sowie der entsprechende Schlagzähmodifier werden zusammen eingewogen und im Umluftofen bei 80°C aufgeschmolzen und mit einem Dispergierer homogenisiert. Anschließend wird die Mischung im Vakuumofen zunächst bei 80°C für 2 h entgast und anschließend für 1 h bei 110°C entgast. Die heiße Duromermischung wird anschließend in eine auf 130°C vorgewärmte Aluminiumgießform gegossen und folgender Heizzyklus gefahren:
1) 130°C → 160°C (Rampe = 2K/min)
2) 160°C für 4 Stunden isotherm halten
3) 160°C → 30°C (Rampe = 3K/min)
4) Freistehendes Nachhärten: 230°C für 4 Stunden

Die Ergebnisse aus den DSC Untersuchungen zeigen, dass das ausgehärtete Duromer eine Glasübergangstemperatur von 285 °C bis 300 ° C aufweist.

Die Charakterisierung der Flammschutzeigenschaften und der DMA-Tests ist im Folgenden beschrieben.
Hierzu wurden Blends der Zusammensetzung PT15/HP4710/FSM hergestellt. Das Mischungsverhältnis von PT15/HP4710 betrug 1/0,5.

| FSM | Gewichtsanteil FSM / wt% | UL-94-Bewertung¹⁾ | T_{g} / °C | Tₒₙₛₑₜ / °C |
|---|---|---|---|---|
| HFC-X | 2,9 | Brennt | 294 | 269 |
| HFC-X | 4,8 | Brennt | 291 | 264 |
| HFC-X | 9,1 | V-0²⁾ | 281 | 249 |
| | | | | |
| Fyrol® PMP | 2,9 | Brennt | 306 | 281 |
| Fyrol® PMP | 4,8 | Brennt | 288 | 260 |
| Fyrol® PMP | 6,5 | V-1³⁾ | 293 | 267 |
| Fyrol® PMP | 9,1 | V-1 | 283 | 254 |

| | | | | |
|---|---|---|---|---|
| ¹⁾ Die Beflammzeit war maximal 60s. Bis zu einer Zeit von 12s konnten alle Prüfkörper nicht entflammt werden und haben daher die Bewertung V-0 für t<12s. ²⁾ V-0: Verlöschen einer vertikal eingespannten Probe innerhalb von 10s ohne brennendes Abtropfen der Kunststoffschmelze ³⁾ V-1: Verlöschen einer vertikal eingespannten Probe innerhalb von 30s ohne brennendes Abtropfen der Kunststoffschmelze. | | | | |

Die Schlagzähigkeitsmodifizierungen mittels Core-Shell-partikeln ist im Folgenden beschrieben. Hierzu wurden PT15/HP4710/HFC- X/Modifier-Blends verwendet. Die Zusammensetzung von (PT15/HP4710)/HFC-X betrug: (1/0,5)/0,07. Die Menge an Schlagzähigkeitsmodifikator ist in Folgender Tabelle angegeben.

| Modifier | Gewichtsanteil Modifier / wt% | Tg / °C | Tonset / °C |
|---|---|---|---|
| Albidur EP2240A | 9,1 | 285 | 258 |
| | | | |
| Albidur EP5340A | 9,1 | 289 | 264 |
| Albidur EP5340A | 13,8 | 284 | 257 |
| | | | |
| Albidur XP10669 | 9,1 | 291 | 265 |

## Patentansprüche

1. Polymerisierbare Duromer-Zusammensetzung, umfassend
a) ein di- oder polyfunktionelles organisches Cyanatesterharz,
b) ein naphthalin-basiertes Epoxidharz, und
c1) mindestens ein phosphorhaltiges Phenol,
wobei das phosphorhaltige Phenol eine der folgenden Struktureinheiten enthält: 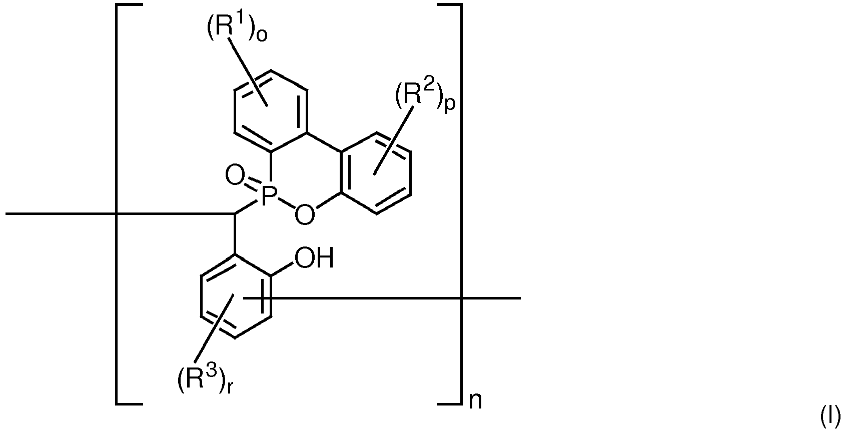 wobei
n eine Zahl zwischen 1 und 1000 ist,
o eine Zahl zwischen 0 und 4 ist,
p eine Zahl zwischen 0 und 4 ist,
r eine Zahl zwischen 0 und 3 ist,
R¹ ein C₁-C₁₀-Alkyl ist,
R² ein C₁-C₁₀-Alkyl ist und
R³ ein C₁-C₁₀-Alkyl ist
oder 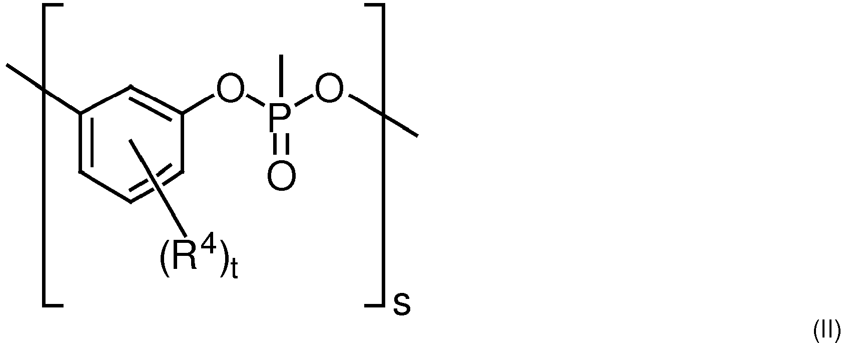 wobei
s eine Zahl zwischen 1 und 1000 ist,
t eine Zahl zwischen 0 und 4 ist und
R⁴ ein C₁-C₁₀-Alkyl ist.

2. Polymerisierbare Duromer-Zusammensetzung gemäß Anspruch 1, weiter umfassend c2) mindestens ein phosphorhaltiges Epoxid und mindestens ein Diamin.

3. Polymerisierbare Duromer-Zusammensetzung gemäß Anspruch 2, wobei das phosphorhaltiges Epoxid ein (Hydrocarbyl-)Phosphonsäureester ist und/oder 9-dihydro-9-oxo-10-phosphaphenanthren-10-oxid als Struktureinheit enthält.

4. Polymerisierbare Duromer-Zusammensetzung gemäß Anspruch 2 oder 3, wobei das phosphorhaltiges Epoxid die folgende Struktureinheit (III) enthält: 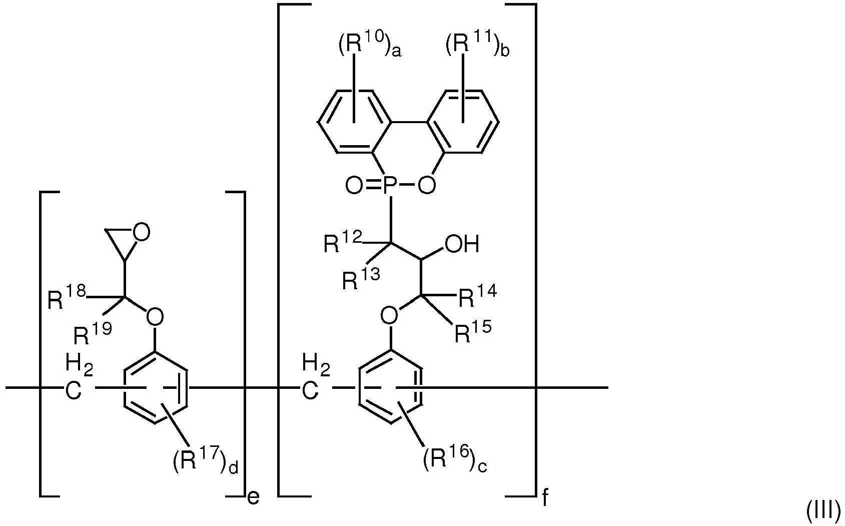 wobei
a eine Zahl zwischen 0 und 4 ist,
b eine Zahl zwischen 0 und 4 ist,
c eine Zahl zwischen 0 und 3 ist,
d eine Zahl zwischen 0 und 3 ist,
e eine Zahl zwischen 1 und 1000 ist,
f eine Zahl zwischen 1 und 1000 ist,
R¹⁰ ein C₁-C₁₀-Alkyl ist,
R¹¹ ein C₁-C₁₀-Alkyl ist,
R¹² ein C₁-C₁₀-Alkyl oder Wasserstoff ist,
R¹³ ein C₁-C₁₀-Alkyl oder Wasserstoff ist,
R¹⁴ ein C₁-C₁₀-Alkyl oder Wasserstoff ist,
R¹⁵ ein C₁-C₁₀-Alkyl oder Wasserstoff ist,
R¹⁶ ein C₁-C₁₀-Alkyl ist,
R¹⁷ ein C₁-C₁₀-Alkyl ist,
R¹⁸ ein C₁-C₁₀-Alkyl oder Wasserstoff ist und
R¹⁹ ein C₁-C₁₀-Alkyl oder Wasserstoff ist.

5. Polymerisierbare Duromer-Zusammensetzung gemäß einem der vorangegangenen Ansprüche, wobei das di- oder polyfunktionelle organische Cyanatesterharz ein Cyanat der Formel (IV) ist: 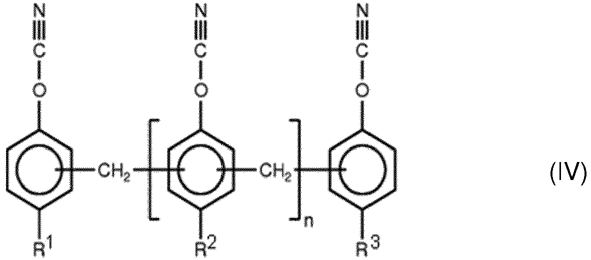 wobei R¹, R² und R³ unabhängig voneinander Wasserstoff oder C₁-C₁₀-Alkyl sind und n eine ganze Zahl von 0 bis 20 darstellt.

6. Polymerisierbare Duromer-Zusammensetzung gemäß einem der vorherigen Ansprüche, wobei das naphthalin-basierte Epoxidharz ein polymeres naphthalin-basiertes Epoxidharz darstellt.

7. Polymerisierbare Duromer-Zusammensetzung gemäß einem der vorherigen Ansprüche, wobei die polymerisierbare Duromer-Zusammensetzung mindestens ein Hochleistungsthermoplast umfasst, vorzugsweise mindestens ein Hochleistungsthermoplast, das ausgewählt ist aus der Gruppe umfassend Polysulfone (PSU), beispielsweise Polyethersulfone (PES) und Polyphenylensulfone (PPSU), Polyetherimid (PEI), Polysulfon (PSU, Polycarbonat (PC), Silikonkautschuk und Mischungen hiervon.

8. Polymerisierbare Duromer-Zusammensetzung gemäß Anspruch 7, wobei der Hochleistungsthermoplast in Form von Core-Shell-partikeln vorliegt.

9. Polymerisierbare Duromer-Zusammensetzung gemäß Anspruch 8, wobei die Hülle der Core-Shell-partikel ein Epoxidharz, einen Cyanatester oder Mischungen hiervon enthält und der Kern einen Silikonkautschuk enthält.

10. Polymerisiertes Duromer, das ein Reaktionsprodukt der polymerisierbaren Duromer-Zusammensetzung nach einem der Ansprüche 1 bis 9 darstellt.

11. Polymerisiertes Duromer gemäß Anspruch 10, wobei das Duromer eine Glasübergangstemperatur von 285 °C bis 300 °C aufweist und/oder eine Aushärtetemperatur in einem Bereich von 100 bis 180 °C.

12. Verfahren zur Herstellung eines polymerisierten Duromers gemäß Anspruch 10 oder 11, umfassend die Schritte
i) Bereitstellung einer polymerisierbaren Duromer-Zusammensetzung gemäß einem der Ansprüche 1 bis 9,
ii) Polymerisation der polymerisierbaren Duromer-Zusammensetzung bei Temperaturen in einem Bereich von 100 bis 180 °C.

13. Verwendung der polymerisierbaren Duromer-Zusammensetzung nach einem der Ansprüche 1 bis 9 zur Herstellung von konstruktiven Leichtbauteilen, vorzugsweise Kohlefaser-Verbundwerkstoffe (CFK).

14. Konstruktives Leichtbauteil, vorzugsweise Kohlefaser-Verbundwerkstoff (CFK), enthaltend das polymerisierte Duromer gemäß Anspruch 10 oder 11.

## Claims

1. Polymerizable duromer composition comprising
a) a di- or polyfunctional organic cyanate ester resin,
b) a naphthalene-based epoxy resin; and
c1) at least one phosphorus-containing phenol,
wherein the phosphorus-containing phenol contains one of the following structural units: 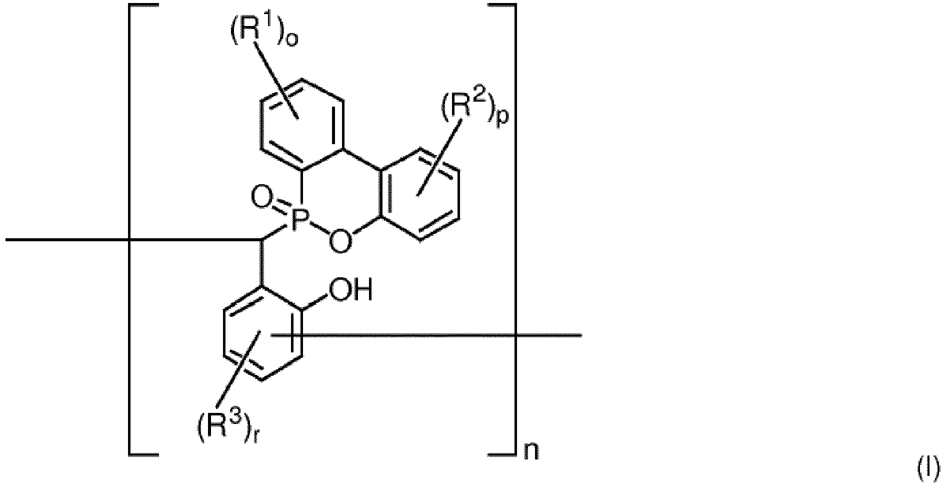 wherein
n is a number between 1 and 1000,
o is a number between 0 and 4,
p is a number between 0 and 4,
r is a number between 0 and 3,
R¹ is a C₁-C₁₀-alkyl,
R² is a C₁-C₁₀-alkyl and
R³ is a C₁-C₁₀-alkyl
or 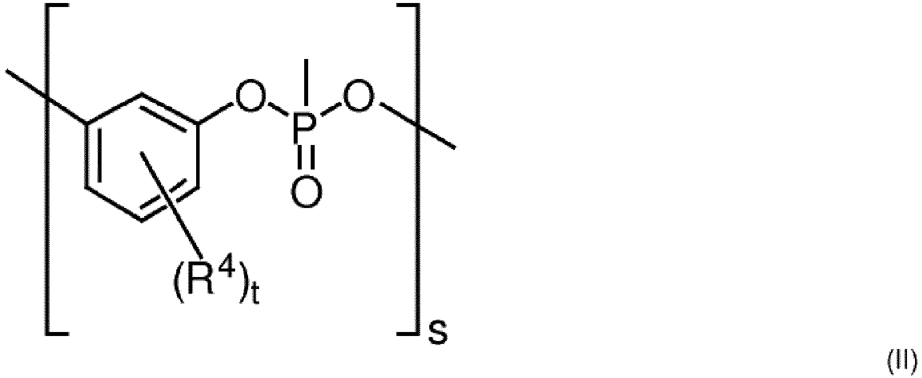 wherein
s is a number between 1 and 1000,
t is a number between 0 and 4 and
R⁴ is a C₁-C₁₀-alkyl.

2. Polymerizable duromer composition according to claim 1, further comprising c2) at least one phosphorus-containing epoxide and at least one diamine.

3. Polymerizable duromer composition according to claim 2, wherein the phosphorus-containing epoxide is a (hydrocarbyl)phosphonic acid ester and/or contains 9-dihydro-9-oxo-10-phosphaphenanthrene-10-oxide as a structural unit.

4. Polymerizable duromer composition according to claim 2 or 3, wherein the phosphorus-containing epoxide contains the following structural unit (III): 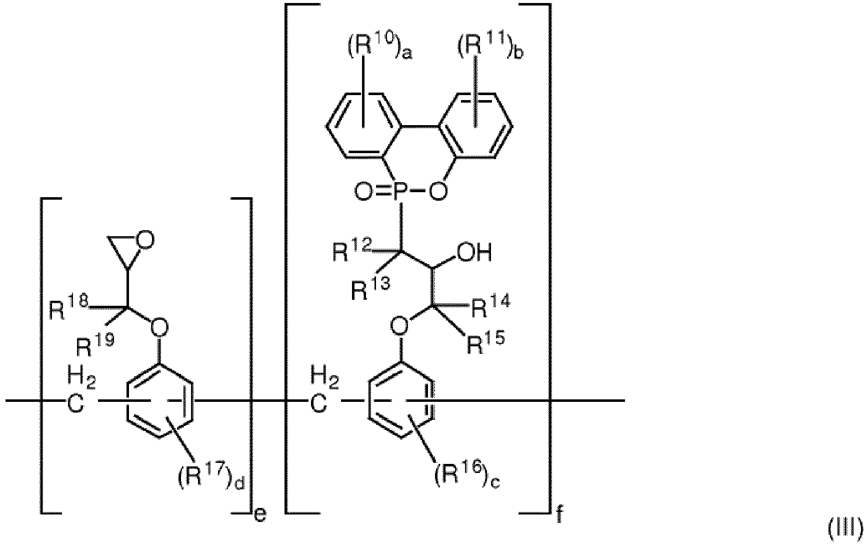 wherein
a is a number between 0 and 4,
b is a number between 0 and 4,
c is a number between 0 and 3,
d is a number between 0 and 3,
e is a number between 1 and 1000,
f is a number between 1 and 1000,
R¹⁰ is a C₁-C₁₀ alkyl,
R¹¹ is a C₁-C₁₀-alkyl,
R¹² is a C₁-C₁₀-alkyl or hydrogen,
R¹³ is a C₁-C₁₀-alkyl or hydrogen,
R¹⁴ is a C₁-C₁₀-alkyl or hydrogen,
R¹⁵ is a C₁-C₁₀-alkyl or hydrogen,
R¹⁶ is a C₁-C₁₀-alkyl,
R¹⁷ is a C₁-C₁₀-alkyl,
R¹⁸ is a C₁-C₁₀-alkyl or hydrogen and
R¹⁹ is a C₁-C₁₀-alkyl or hydrogen

5. Polymerizable duromer composition according to any of the foregoing claims, wherein the di- or polyfunctional organic cyanate ester resin is a cyanate of formula (IV): 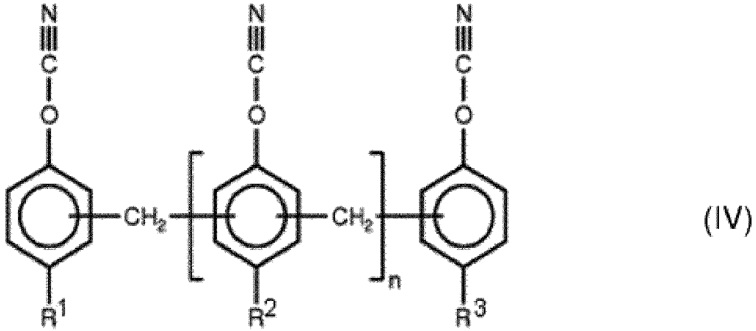 wherein R¹, R² and R³ are independently hydrogen or C₁-C₁₀-alkyl and n represents an integer of 0 to 20.

6. Polymerizable duromer composition according to any of the foregoing claims, wherein the naphthalene-based epoxy resin is a polymeric naphthalene-based epoxy resin.

7. Polymerizable duromer composition according to any of the foregoing claims, wherein the polymerizable duromer composition comprises at least one high performance thermoplastic, preferably at least one high performance thermoplastic selected from the group comprising polysulfones (PSU), for example polyethersulfones (PES) and polyphenylenesulfones (PPSU), polyetherimide (PEI), polysulfone (PSU), polycarbonate (PC), silicone rubber and mixtures thereof.

8. Polymerizable duromer composition according to claim 7, wherein the high performance thermoplastic is in the form of core-shell particles.

9. Polymerizable duromer composition according to claim 8, wherein the shell of the core-shell particles comprises an epoxy resin, a cyanate ester or mixtures thereof and the core comprises a silicone rubber.

10. Polymerized duromer which is a reaction product of the polymerizable duromer composition according to any of claims 1 to 9.

11. Polymerized duromer according to claim 10, wherein the duromer has a glass transition temperature of 285 °C to 300 °C and/or a curing temperature in a range of 100 to 180 °C.

12. Process for the production of a polymerized duromer according to claim 10 or 11, comprising the steps of
i) Providing a polymerizable duromer composition according to any of claims 1 to 9,
ii) Polymerization of the polymerizable duromer composition at temperatures in the range of 100 to 180 °C.

13. Use of the polymerizable duromer composition according to any of claims 1 to 9 for the production of lightweight structural components, preferably carbon fiber composites (CFRP).

14. Lightweight structural components, preferably carbon fiber composites (CFRP) containing the polymerized duromer according to claim 10 or 11.

## Revendications

1. Composition de duromère polymérisable comprenant
a) une résine d'ester cyanate organique di- ou polyfonctionnelle
b) une résine époxy à base de naphtalène ; et
(c1) au moins un phénol contenant du phosphore,
dans laquelle le phénol contenant du phosphore présente l'une des unités structurelles suivantes : 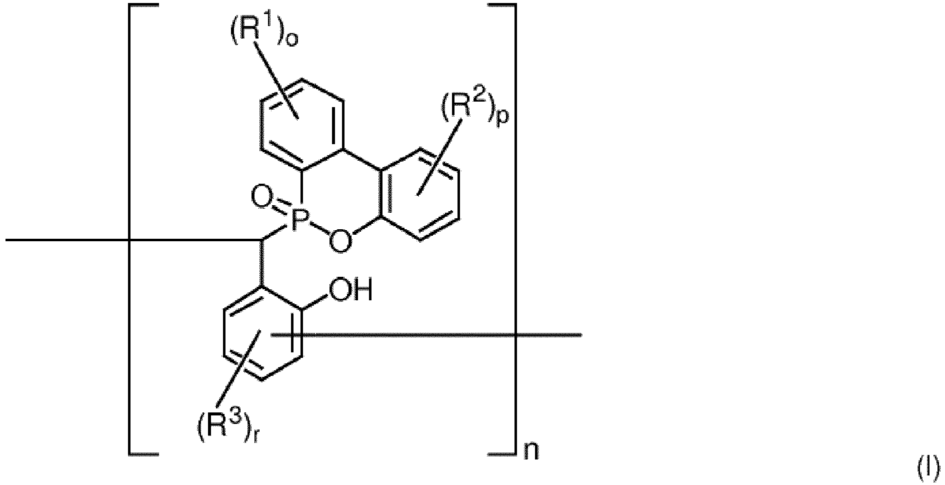 où
n est un nombre compris entre 1 et 1000,
o est un nombre compris entre 0 et 4,
p est un nombre compris entre 0 et 4,
r est un nombre compris entre 0 et 3,
R¹ est un C₁-C₁₀-alkyle,
R² est un C₁-C₁₀-alkyle et
R³ est un C₁-C₁₀-alkyle
ou 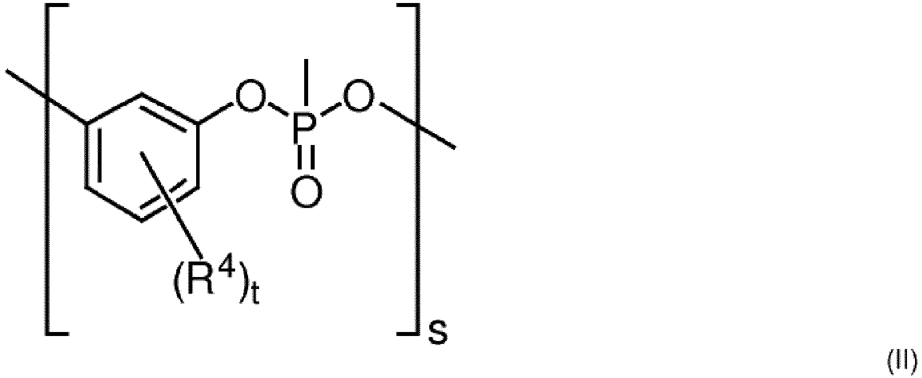 où
s est un nombre compris entre 1 et 1000,
t est un nombre compris entre 0 et 4 et
R⁴ est un C₁-C₁₀-alkyle.

2. Composition de duromère polymérisable selon la revendication 1, comprenant en outre c2) au moins un époxyde contenant du phosphore et au moins une diamine.

3. Composition de duromère polymérisable selon la revendication 2, dans laquelle l'époxyde contenant du phosphore est un ester d'acide (hydrocarbyl)phosphonique et/ou contient du 9-dihydro-9-oxo-10-phosphaphénanthrène-10-oxyde comme unité structurelle.

4. Composition de duromère polymérisable selon la revendication 2 ou 3, dans laquelle l'époxyde contenant du phosphore contient l'unité structurelle (III) suivante : 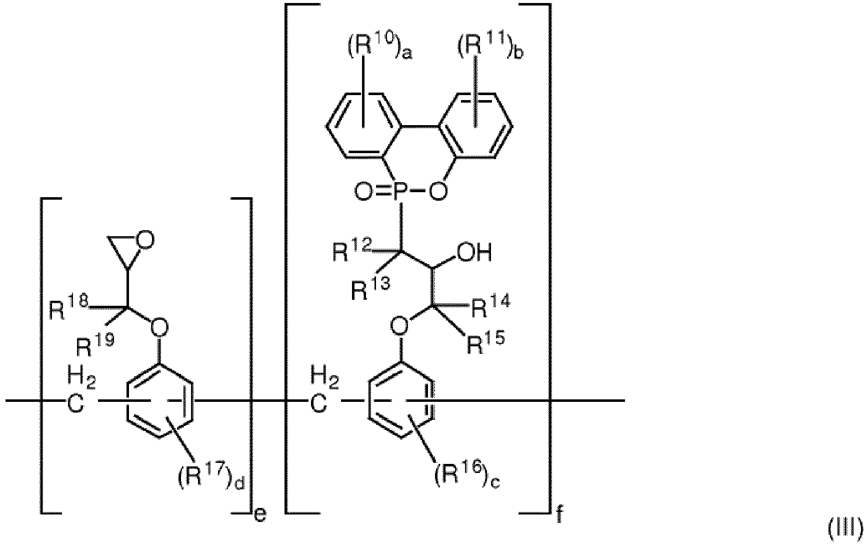 où
a est un nombre compris entre 0 et 4,
b est un nombre compris entre 0 et 4,
c est un nombre compris entre 0 et 3,
d est un nombre compris entre 0 et 3,
e est un nombre compris entre 1 et 1000,
f est un nombre compris entre 1 et 1000,
R¹⁰ est un C₁-C₁₀-alkyle,
R¹¹ est un C₁-C₁₀-alkyle,
R¹² est un C₁-C₁₀-alkyle ou un hydrogène,
R¹³ est un C₁-C₁₀-alkyle ou un hydrogène,
R¹⁴ est un C₁-C₁₀-alkyle ou un hydrogène,
R¹⁵ est un C₁-C₁₀-alkyle ou un hydrogène,
R¹⁶ est un C₁-C₁₀-alkyle,
R¹⁷ est un C₁-C₁₀-alkyle,
R¹⁸ est un C₁-C₁₀-alkyle ou un hydrogène et
R¹⁹ est un C₁-C₁₀-alkyle ou un hydrogène

5. Composition de duromère polymérisable selon l'une quelconque des revendications précédentes, dans laquelle la résine d'ester cyanate organique di- ou polyfonctionnel est un cyanate de formule (IV) : 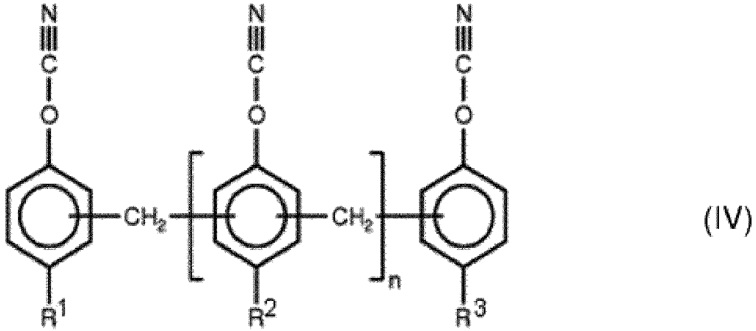 dans laquelle R¹, R² et R³ sont indépendamment un atome d'hydrogène ou un groupe C₁-C₁₀-alkyle et n est un nombre entier de 0 à 20.

6. Composition de duromère polymérisable selon l'une des revendications précédentes, dans laquelle la résine époxy à base de naphtalène est une résine époxy polymère à base de naphtalène.

7. Composition de duromère polymérisable selon l'une quelconque des revendications précédentes, dans laquelle la composition de duromère polymérisable comprend au moins un thermoplastique haute performance, de préférence au moins un thermoplastique haute performance choisi dans le groupe comprenant les polysulfones (PSU), par exemple les polyéthersulfones (PES) et les polyphénylène sulfones (PPSU), le polyétherimide (PEI), la polysulfone (PSU), le polycarbonate (PC), le caoutchouc de silicone et leurs mélanges.

8. Composition de duromère polymérisable selon la revendication 7, dans laquelle le thermoplastique haute performance se présente sous la forme de particules coeur-enveloppe.

9. Composition de duromère polymérisable selon la revendication 8, dans laquelle l'enveloppe des particules noyau-enveloppe comprend une résine époxy, un ester cyanate ou des mélanges de ceux-ci et le noyau comprend un caoutchouc de silicone.

10. Duromère polymérisée comprenant un produit de réaction de la la composition du duromer selon l'une des revendications 1 à 9.

11. Duromère polymérisée selon la revendication 10, dans lequel le duromère est une température de transition vitreuse de 285 °C à 300 °C et/ou une température de durcissement dans une fourchette de 100 à 180 °C.

12. Procédé de production d'un duromère polymérisé selon la revendication 10 ou 11, comprenant les étapes
i) fournir une composition de duromère polymérisable selon l'une quelconque des revendications 1 à 9,
(ii) la polymérisation de la composition duromère polymérisable à des températures comprises entre 100 et 180 °C.

13. Utilisation de la composition de duromères polymérisables selon l'une des revendications 1 à 9 pour la production de composants structurels légers, de préférence des composites à base de fibres de carbone (CFRP).

14. Composant structurel léger, de préférence en composite de fibres de carbone (CFRP) contenant le duromère polymérisé selon la revendication 10 ou 11.
